# EUROPÄISCHE PATENTSCHRIFT

(11) **EP 3 815 054 B1**
(45) Veröffentlichungstag und Bekanntmachung des Hinweises auf die Patenterteilung: **08.07.2026**
(21) Anmeldenummer: 19735268.5
(22) Anmeldetag: 27.06.2019
(51) Int. Cl.: G07C 9/00, H01Q 1/32, H04L 9/32, H04L 9/40, H04W 12/06, H04W 12/63

(54) **VERFAHREN ZUR ABSICHERUNG EINER KOMMUNIKATION ZWISCHEN EINEM MOBILEN KOMMUNIKATIONSGERÄT UND EINEM FAHRZEUG**
METHOD FOR THE PROTECTION OF COMMUNICATION BETWEEN A MOBILE COMMUNICATIONS DEVICE AND A VEHICLE
PROCÉDÉ DE SÉCURISATION D'UNE COMMUNICATION ENTRE UN APPAREIL DE COMMUNICATION MOBILE ET UN VÉHICULE

(30) Priorität: 29.06.2018 DE 102018115851
(43) Veröffentlichungstag der Anmeldung: 05.05.2021
(73) Patentinhaber: Huf Hülsbeck & Fürst GmbH & Co. KG, 42551 Velbert (DE)
(72) Erfinder: BREER, Jan, 45259 Essen (DE); MASCHLANKA, Matthias, 46459 Rees (DE); MÖLLER, Julia, 42551 Velbert (DE); FELDSIEPER, Marc, 45529 Hattingen (DE); LANZE, Fabian, 40468 Düsseldorf (DE)
(74) Vertreter: Bals & Vogel Patentanwälte PartGmbB
(86) Internationale Anmeldenummer: PCT/EP2019/067146
(87) Internationale Veröffentlichungsnummer: WO 2020/002499

(56) Entgegenhaltungen:
- EP-A1- 2 979 401
- EP-A1- 3 335 942
- DE-A1- 102017 103 187
- US-A1- 2008 109 880

## Beschreibung

Die vorliegende Erfindung betrifft ein Verfahren zur Absicherung einer Kommunikation zwischen einem mobilen Kommunikationsgerät und einem Fahrzeug. Ferner bezieht sich die Erfindung auf ein Funkmodul, ein Kommunikationsgerät sowie ein System mit dem Kommunikationsgerät.

Aus dem Stand der Technik ist es bekannt, zur Authentifizierung eines Kommunikationsteilnehmers ein Challenge-Response-Verfahren zu nutzen. Hierbei erfolgt eine Überprüfung auf der Basis von Wissen, d. h. es wird überprüft, ob dieser Kommunikationsteilnehmer als das zu authentifizierende Gerät eine bestimmte geheime Information ("Shared Secret") kennt. Hierzu kann eine Aufgabe (engl. Challenge) gestellt werden, welche das zu authentifizierende Gerät lösen muss. Die Lösung kann anschließend als die "Response" an das Gerät, welches die Authentifizierung durchführt, übertragen werden. Dieses Gerät kann ebenfalls die Aufgabe unabhängig vom zu authentifizierenden Gerät lösen. Stimmen die Lösungen überein, ist die Authentifizierung erfolgreich.

Ein derartiges Verfahren kann ferner auch für Sicherheits- und Zugangssysteme von Fahrzeugen angewandt werden, um bspw. die Kommunikation zwischen einem mobilen Kommunikationsgerät (z. B. einem elektronischen Schlüssel) und dem Fahrzeug abzusichern.

Es sind ferner Methoden bekannt, um Angriffe auf derartige Authentifizierungsverfahren durchzuführen. So ist es ggf. ein Problem, wenn die Kommunikation zwischen den Teilnehmern und damit der Austausch der Lösungen abgehört wird, um bspw. Rückschlüsse auf das Shared Secret zu ziehen. Die EP 3335942 A1 betrifft ein passives Zugangssystem für ein Fahrzeug. Weiterer Stand der Technik ist der US 2008109880 A1, DE 102017103187 A1 und EP 2979401 A1 zu entnehmen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und sicherere Authentifizierung bereitzustellen.

Die voranstehende Aufgabe wird gelöst durch ein Verfahren mit den Merkmalen des unabhängigen Verfahrenssanspruchs 1, durch ein Funkmodul mit den Merkmalen des unabhängigen, nebengeordneten Vorrichtungsanspruchs 12, durch ein Kommunikationsgerät mit den Merkmalen des weiteren unabhängigen, nebengeordneten Vorrichtungsanspruchs 14 sowie durch ein System mit den Merkmalen des Systemanspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Funkmodul, dem erfindungsgemäßen Kommunikationsgerät sowie dem erfindungsgemäßen System, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Verfahren zur Absicherung einer Kommunikation zwischen einem mobilen Kommunikationsgerät und einem Fahrzeug nach Anspruch 1, insbesondere im Rahmen der Authentifizierung und/oder Abstandsermittlung bei einem passiven Zugangssystem des Fahrzeugs, vorzugsweise zur Absicherung einer Abstandsermittlung eines Abstands zwischen dem Kommunikationsgerät und dem Fahrzeug. Dabei kann das mobile Kommunikationsgerät als ein elektronischer Schlüssel (Identifikationsgeber) für das Fahrzeug oder als ein Mobilfunkgerät, wie ein Smartphone oder dergleichen ausgeführt sein, um eine sicherheitsrelevante Funktion bei dem Fahrzeug (insbesondere bei dem Zugangssystem) zu aktivieren.

Die sicherheitsrelevante Funktion ist z. B. ein Entriegeln oder Verriegeln eines Schließsystems des Fahrzeuges, um ein Öffnen oder Schließen von Türen und/oder einer Heckklappe des Fahrzeuges zu ermöglichen. Dies setzt insbesondere voraus, dass ein Benutzer als berechtigt authentifiziert wird. Hierzu kann das mobile Kommunikationsgerät durch den Benutzer mit sich geführt werden, und einen Datenaustausch, z. B. eines Codes oder dergleichen, mit dem Fahrzeug durchführen, um sich als berechtigt zu authentisieren. Um die Sicherheit weiter zu erhöhen, kann vorgesehen sein, auch die Kommunikation zur Durchführung des Datenaustausches abzusichern. Hierzu ist bspw. vorgesehen, dass wenigstens einer der daran beteiligten Kommunikationsteilnehmer authentifiziert wird, dass also z. B. das Kommunikationsgerät den wenigstens einen weiteren an der Kommunikation beteiligen Kommunikationsteilnehmer authentifiziert. In anderen Worten kann eine gegenseitige Authentifizierung des mobilen Kommunikationsgeräts und des Fahrzeuges vorgesehen sein. Hierzu kann eine erste Authentifizierung durch das mobile Kommunikationsgerät durchgeführt werden, damit das mobile Kommunikationsgerät sicherstellen kann, dass sein Kommunikationspartner tatsächlich ein Gerät des Fahrzeuges ist und daraufhin eine zweite Authentifizierung durch das Fahrzeug durchgeführt werden, damit das Fahrzeug das mobile Kommunikationsgerät authentifiziert, um die sicherheitsrelevante Funktion zu aktivieren.

Hierbei ist es möglich, dass das Fahrzeug wenigstens eine Funkeinheit aufweist (insbesondere als der Kommunikationspartner für das mobile Kommunikationsgerät bzw. als der weitere Kommunikationsteilnehmer). Bspw. sind mindestens zwei oder mindestens drei oder mindestens vier oder mindestens acht Funkeinheiten am Fahrzeug vorgesehen, um eine möglichst zuverlässige Kommunikation (z. B. auch für unterschiedliche räumliche Bereiche und/oder Richtungen) und/oder eine zuverlässige Entfernungsmessung der Entfernung zum Kommunikationsgerät bereitstellen zu können. Die wenigstens eine Funkeinheit kann jeweils als eine fest am Fahrzeug angeordnete Funkeinheit, vorzugsweise als eine elektronische Funkeinheit, ausgebildet sein, welche optional mit einer (zentralen) Fahrzeugelektronik elektrisch verbunden ist.

Vorteilhafterweise werden bei einem erfindungsgemäßen Verfahren zumindest die Schritte des Anspruchs 1 durchgeführt:
a) Durchführen einer Übertragung zur Bereitstellung wenigstens einer kennzeichenspezifischen Aufgabeninformation von dem mobilen Kommunikationsgerät an die wenigstens eine Funkeinheit des Fahrzeuges (dabei kann z. B. eine Übertragungsbotschaft mit Daten übertragen werden, welche für die kennzeichenspezifische Aufgabeninformation spezifisch ist),
b) Durchführen einer fahrzeugseitigen Verarbeitung der (bereitgestellten) kennzeichenspezifischen Aufgabeninformation, bspw. durch eine Verarbeitungseinheit der jeweiligen Funkeinheit und/oder des Fahrzeuges, um ein Kennzeichen für die Funkeinheit zu ermitteln, insbesondere zu berechnen,
c) Bestimmen einer Adressierungsinformation durch das mobile Kommunikationsgerät unabhängig von der fahrzeugseitigen Verarbeitung, bspw. durch eine Verarbeitungsvorrichtung des Kommunikationsgeräts,
d) Initiieren einer Kommunikation anhand der Adressierungsinformation durch das mobile Kommunikationsgerät, bspw. durch eine Schnittstellenvorrichtung, insbesondere durch eine Funkschnittstellenvorrichtung, des Kommunikationsgeräts,
e) Durchführen der Kommunikation zwischen dem mobilen Kommunikationsgerät und der Funkeinheit, wenn die Adressierungsinformation mit dem ermittelten (bzw. berechneten) Kennzeichen übereinstimmt.

Damit kann besonders zuverlässig eine Absicherung der Kommunikation zwischen dem Fahrzeug und dem mobilen Kommunikationsgerät bereitgestellt werden. Insbesondere bietet das beschriebene Vorgehen den Vorteil, dass die Absicherung (insbesondere die Authentifizierung) nicht oder zumindest nicht ausschließlich auf einen herkömmlichen Austausch einer Lösung gemäß einem Challenge-Response-Verfahren zwischen der Funkeinheit und dem Kommunikationsgerät basieren muss. Damit ist eine Manipulation von sicherheitsrelevanten Information nicht oder nur erschwert möglich, obwohl der Datenaustausch für sämtliche Geräte, ob berechtigt oder unberechtigt, mithörbar stattfinden kann. Dennoch kann das Ziel erreicht werden, dass das mobile Kommunikationsgerät die Funkeinheit als berechtigt authentifiziert. Denn die Kommunikation wird nur dann durchgeführt, wenn die Adressierungsinformation mit dem ermittelten Kennzeichen, insbesondere in einer vorgegebenen Zeitspanne ΔT für die Beantwortung, übereinstimmt. Wird z. B. diese Beantwortungszeitspanne ΔT überschritten, so kann auch die Authentifizierung, selbst bei Übereinstimmung der richtigen Adressierungsinformation mit dem ermittelten (bzw. berechneten) Kennzeichen (nach Schritt e)), ausgesetzt werden.

Die Bereitstellung der wenigstens einen kennzeichenspezifischen Aufgabeninformation kann z. B. dadurch erfolgen, dass Daten wie eine Übertragungsbotschaft gemäß Schritt a) übertragen werden, welche für die kennzeichenspezifische Aufgabeninformation spezifisch sind. Es können dann ggf. noch weitere Schritte (zur Bereitstellung und/oder zum Erhalt der kennzeichenspezifischen Aufgabeninformation) notwendig sein, wie z. B. eine Auswertung der Daten durch die Funkeinheit, um die Aufgabeninformation auch tatsächlich zu ermitteln bzw. zu erhalten. Es kann als weiterer Sicherheitsmechanismus vorgesehen sein, dass diese Auswertung mittels eines geheimen Schlüssels durchgeführt wird, welchen nur die Funkeinheit und/oder das Kommunikationsgerät aufweist. Durch die Nutzung unterschiedlicher Auswertungen kann ferner noch die Ermittlung wenigstens einer weiteren Aufgabeninformation aus den gleichen Daten möglich sein. Dies ermöglicht es, die Sicherheit zu erhöhen, und gleichzeitig die gemäß Schritt a) zu übertragenen Daten zu reduzieren (eine Übertragung einer einzigen Übertragungsbotschaft stellt dann z. B. mehrere Aufgabeninformationen bereit).

Von Vorteil ist es ferner, wenn die fahrzeugseitige Verarbeitung und/oder die Bestimmung der Adressierungsinformation derart ausgeführt sind, dass nur anhand einer (insbesondere geheimen) Information (bspw. eines "Shared Secrets" oder "Secret Keys") das Kennzeichen ermittelt bzw. die Adressierungsinformation bestimmt werden kann. Insbesondere ist dabei die geheime Information eine gemeinsame Information des mobilen Kommunikationsgeräts und der wenigstens einen Funkeinheit bzw. des Fahrzeuges, also für die Funkeinheit(en) bzw. das Fahrzeug und das Kommunikationsgerät, identisch. Es können ggf. auch unterschiedliche gemeinsame geheime Informationen für unterschiedliche Funkeinheiten vorgesehen sein. Das Kommunikationsgerät kann bei einer positiven Übereinstimmung gemäß Schritt e) also davon ausgehen, dass die Funkeinheit (aufgrund der Kenntnis der geheimen Information) zum Fahrzeug gehört und berechtigt ist. Auch kann vorteilhafterweise vermieden werden, dass Rückschlüsse auf die (geheime) Information gemacht werden können, da die Lösung der Aufgabeninformation als Aufgabe gemäß einem Challenge-Response-Verfahren nicht als klassischer Response übertragen wird, sondern die Übereinstimmung anhand der Adressierung mittels der Adressierungsinformation überprüft wird. In anderen Worten gibt es ggf. keine "Trainingsmöglichkeit" zum Erlernen der Verschlüsselung oder dergleichen, da die Funkeinheit nicht ohne Kenntnis der (insbesondere geheimen) Information angefragt werden kann.

Darüber hinaus kann ein erfindungsgemäßes Verfahren den Vorteil haben, dass die Anzahl von ausgetauschten Kommunikationsdaten, insbesondere Telegrammen, reduziert wird. Vorzugsweise wird hierzu das ermittelte Kennzeichen ausschließlich innerhalb der (jeweiligen) Funkeinheit verwendet und/oder verarbeitet und damit nicht ausgesendet oder über eine Kommunikationsverbindung separat an das Kommunikationsgerät übertragen, damit dieses vom Kommunikationsgerät ausgewertet werden kann. Damit können ferner ein zeitlicher Aufwand und ein Energieverbrauch beim Fahrzeug und/oder beim mobilen Kommunikationsgerät reduziert werden. Auch kann ggf. für die Verarbeitung des Kommunikationsgeräts, z. B. für die Bestimmung der Adressierungsinformation, und/oder für die Verarbeitung der jeweiligen Funkeinheit ausreichend Zeit gewonnen werden, da die Challenge frühzeitig bekannt ist.

Als besonders effektive Sicherheitsmaßnahme hat es sich ferner herausgestellt, wenn die (jeweilige) Funkeinheit das ermittelte Kennzeichen nutzt, um dieses als Identifikator für eine Adressierung festzulegen. Es handelt sich bei dem Identifikator z. B. um eine Adresse, welche zur Ansprache der Funkeinheit und/oder zur Verbindung mit der Funkeinheit genutzt werden kann. Dabei kann durch die Festlegung des Identifikators, also die Adresse, inhaltlich dem Kennzeichen entsprechen oder auch aus dem Kennzeichen abgeleitet sein. In anderen Worten kann jede Funkeinheit ihre Adressierung selbst verändern. Insbesondere kann dabei eine Ansprache der jeweiligen Funkeinheit ohne Kenntnis des Identifikators ausgeschlossen sein, sodass in diesem Fall keine Kommunikation mit der Funkeinheit möglich ist. Bspw. verwirft die jeweilige Funkeinheit ein empfangenes Paket, wenn die darin vorhandene Adressierungsinformation nicht mit dem Identifikator übereinstimmt. In diesem Fall wird das Paket nicht weiter durch die Funkeinheit ausgewertet. Das Paket ist bspw. ein Datenpaket, welches zur Initiierung der Kommunikation von dem Kommunikationsgerät ausgesendet wird. Die Ermittlung und Manipulation von sicherheitsrelevanten Informationen wird damit sehr erschwert.

Es ist ferner vorteilhaft, wenn gemäß Schritt d) das Initiieren der Kommunikation anhand der Adressierungsinformation dadurch erfolgt, dass das mobile Kommunikationsgerät nach einer Funkeinheit sucht, deren Identifikator (also z. B. eine Adresse) der Adressierungsinformation entspricht. Dieser Vorgang kann bei mehreren Funkeinheiten auch anhand weiterer (unterschiedlicher, den Funkeinheiten zugeordneten) Adressierungsinformationen zur Initiierung weiterer Kommunikationen wiederholt werden. Bspw. kann das Suchen dadurch erfolgen, dass der Identifikator bzw. die Identifikatoren der Funkeinheit(en) sichtbar sind und/oder durch das Kommunikationsgerät von der wenigstens einen Funkeinheit abgefragt werden kann. Auch ist es denkbar, dass zum Suchen das Kommunikationsgerät die Adressierungsinformation z. B. per Broadcast aussendet und/oder an die jeweilige Funkeinheit überträgt, und die Funkeinheit die Adressierungsinformation mit dem Identifikator vergleicht, und nur bei Übereinstimmung eine Kommunikationsverbindung zur Kommunikation gemäß Schritt e) herstellt. Weiter ist es denkbar, dass anhand der Adressierungsinformation eine Verschlüsselung und/oder Codierung des Kommunikationssignals und/oder der dadurch übertragenen Daten durch das Kommunikationsgerät erfolgt und die jeweilige Funkeinheit ihren jeweiligen Identifikator zur Decodierung und/oder Entschlüsselung dieses Kommunikationssignals bzw. der Daten nutzt.

Es kann weiter vorgesehen sein, dass die Übereinstimmung der Adressierungsinformation und des ermittelten Kennzeichens gemäß Schritt e) dadurch festgestellt wird, dass die (jeweilige) Funkeinheit erfolgreich anhand der Adressierungsinformation gemäß Schritt d) adressiert werden kann.

Optional ist es denkbar, dass bei Schritt a) die kennzeichenspezifische Aufgabeninformation durch übertragene Daten, insbesondere durch eine einzige Übertragungsbotschaft, bereitgestellt wird, aus denen die kennzeichenspezifische Aufgabeninformation (z. B. gemäß einer ersten Auswertung) ermittelt wird, und aus denen ebenfalls wenigstens eine weitere Aufgabeninformation (z. B. gemäß einer zweiten Auswertung) ermittelt wird, wobei sich die weitere Aufgabeninformation von der kennzeichenspezifischen Aufgabeninformation unterscheiden kann und vorzugsweise bei Schritt b) durch die fahrzeugseitige Verarbeitung der weiteren Aufgabeninformation eine Lösungsinformation ermittelt (insbesondere berechnet) wird, wobei bevorzugt die Lösungsinformation zur Authentifizierung der Funkeinheit (insbesondere mittels der Kommunikation gemäß Schritt e)) von der Funkeinheit an das mobile Kommunikationsgerät übertragen wird, und bevorzugt sodann durch das mobile Kommunikationsgerät mit einer Vergleichsinformation verglichen wird, um anhand des Vergleichs die Identität der Funkeinheit zu bestätigen (also die Authentifizierung durchzuführen). Durch diese weitere Lösungsinformation, welche einer Response gemäß einem Challenge-Response-Verfahren entsprechen kann, wird ein zusätzlicher Sicherheitsfaktor bereitgestellt. Eine Besonderheit des erfindungsgemäßen Verfahrens kann sich dadurch ergeben, dass die ermittelte Lösungsinformation nur dann von der Funkeinheit an das mobile Kommunikationsgerät übertragen werden kann, wenn die Kommunikation gemäß Schritt e) erfolgreich anhand der Adressierungsinformation (und dem Kennzeichen) hergestellt werden konnte. In anderen Worten ist es also erforderlich, dass zunächst die "erste Challenge" gemäß der kennzeichenspezifischen Aufgabeninformation erfolgreich gelöst werden musste, damit die Response der "zweiten Challenge" gemäß der weiteren Aufgabeninformation übertragen werden kann. Eine Manipulation und/oder Ermittlung der ermittelten Lösungsinformation wird somit deutlich erschwert, da dies nur bei positiver Kenntnis der richtigen Adressierungsinformation bzw. des richtigen Kennzeichnens zur Durchführung der Kommunikation möglich ist.

Außerdem kann es im Rahmen der Erfindung von Vorteil sein, dass die kennzeichenspezifische Aufgabeninformation eine (insbesondere erste) Challenge und das ermittelte Kennzeichen eine (insbesondere erste) Response gemäß einem Challenge-Response-Verfahren sind, und vorzugsweise zusätzlich eine weitere Aufgabeninformation als weitere (insbesondere zweite) Challenge und eine Lösungsinformation als weitere (insbesondere zweite) Response gemäß einem Challenge-Response-Verfahren bereitgestellt werden. Bevorzugt können sich die erste und zweite Challenge-Response dadurch unterscheiden, dass nur bei der zweiten Challenge-Response die zweite Response zur Überprüfung aktiv von der (jeweiligen) Funkeinheit an das Kommunikationsgerät übertragen wird, wohingegen bei der ersten Challenge-Response die Überprüfung der ersten Response anhand eines Zustands der Kommunikation erfolgt. Die Überprüfung ist bspw. dann positiv, wenn die Kommunikation gemäß Schritt e) (insbesondere aufgrund der Übereinstimmung der Adressierungsinformation und des Kennzeichens) erfolgreich aufgebaut und/oder weitergeführt werden kann. Damit kann die Sicherheit bei der Authentifizierung deutlich erhöht werden. Vorzugsweise sollte jedoch die benötigte Beantwortungszeitspanne ΔT mitberücksichtigt werden, um Manipulationsversuche erkennen zu können.

Es kann bei dem erfindungsgemäßen Verfahren möglich sein, dass die Übertragungsbotschaft und/oder die kennzeichenspezifische Aufgabeninformation für eine, insbesondere geheime, Zufallszahl spezifisch ist oder dieser entspricht. Dabei kann die Zufallszahl geheim sein, also bspw. nur im Kommunikationsgerät gespeichert und somit für dieses bekannt sein. Auch kann es sich hierbei ggf. um einen Rolling Code handeln, welcher z. B. sowohl dem Kommunikationsgerät als auch dem Fahrzeug bekannt ist. Die kennzeichenspezifische Aufgabeninformation ist z. B. dadurch spezifisch für die Zufallszahl, dass sie aus der Übertragungsbotschaft berechnet wird, und die Übertragungsbotschaft der Zufallszahl entspricht, oder diese aufweist.

Die kennzeichenspezifische Aufgabeninformation wird z. B. vor Schritt a) durch das mobile Kommunikationsgerät generiert und/oder bereitgestellt und/oder verschlüsselt. Die Übertragung (insbesondere der Übertragungsbotschaft) zur Bereitstellung der kennzeichenspezifischen Aufgabeninformation bei der Funkeinheit gemäß Schritt a) kann anschließend verschlüsselt und/oder durch eine (insbesondere erste) Datenübertragung an die wenigstens eine Funkeinheit erfolgen. Dabei kann es auch vorgesehen sein, dass diese Datenübertragung als Broadcast erfolgt, und somit auch von allen oder anderen Funkeinheiten empfangen werden kann.

Ferner ist es möglich, dass das Ermitteln des Kennzeichens gemäß Schritt b) und/oder das Bestimmen der Adressierungsinformation gemäß Schritt c) jeweils anhand der Aufgabeninformation und somit anhand der gleichen Zufallszahl erfolgen. Dies gewährleistet, dass nur bei Erhalt der kennzeichenspezifischen Aufgabeninformation und/oder erfolgreicher Entschlüsselung der übertragenen Übertragungsbotschaft durch die Funkeinheit das korrekte Kennzeichen ermittelt werden kann, sodass die Adressierungsinformation und das Kennzeichen gleich sind.

Des Weiteren ist es denkbar, dass das Initiieren der Kommunikation gemäß Schritt d) mittels einer, insbesondere zweiten, Datenübertragung der Adressierungsinformation, vorzugsweise per Broadcast an alle Funkeinheiten, erfolgt. Dies ermöglicht eine einfache und zuverlässige Kommunikation, bringt aber ggf. einen Nachteil mit sich, dass ein nicht befugtes Gerät (z. B. eine nicht befugte Funkeinheit, welches den geheimen Schlüssel nicht kennt und/oder die Challenge nicht lösen kann) die per Broadcast übermittelte Adressierungsinformation abfängt. Daher kann die Absicherung der Kommunikation ggf. in Abhängigkeit von einem Zeitpunkt der (insbesondere zweiten) Datenübertragung erfolgen, vorzugsweise in Abhängigkeit von einer zeitlichen Dauer zwischen dieser (zweiten) Datenübertragung und einer weiteren (darauffolgenden, z. B. dritten) Datenübertragung der Kommunikation. Hierzu wird bspw. in dem Kommunikationsgerät ein elektronischer Timer-Baustein genutzt, um nach einem Aussenden der Adressierungsinformation gemäß Schritt d) eine Zeitmessung zu starten. Dies ermöglicht die Messung einer Zeitdauer und/oder eine Signallaufzeitmessung bis zum Empfang einer weiteren Kommunikationsnachricht mittels der Kommunikation gemäß Schritt e). Dabei ist es auch denkbar, dass eine andere Zeitdauer (mit anderen Auslösern) gemessen wird, und/oder die Zeitdauer durch die Funkeinheit (mit-) bestimmt wird. Insbesondere ist diese Zeitdauer spezifisch für einen räumlichen Abstand zwischen dem Kommunikationsgerät und der Funkeinheit, sodass diese Zeitmessung auch der Abstandsmessung dienen kann. Es kann vorgesehen sein, dass die Kommunikation nur dann als abgesichert gilt, wenn der gemessene Abstand einen vorgegebenen Maximalabstand unterschreitet oder wenn die gemessene Zeitdauer (gemeint ist: die Beantwortungszeitspanne ΔT) eine vorgegebene Maximalzeitdauer unterschreitet.

Ebenfalls ist es von Vorteil, dass eine zeitliche Dauer (ΔT) zwischen einer ersten Datenübertragung und/oder einer zweiten Datenübertragung und/oder einer dritten Datenübertragung der Kommunikation ermittelt wird, und gemäß Schritt e) die Kommunikation nur dann weiter durchgeführt wird und/oder als abgesichert gilt, und/oder gemäß einem weiteren Schritt f) die Funkeinheit nur dann als berechtigt erkannt wird und/oder nur dann eine positive Authentifizierung erfolgt, wenn die zeitliche Dauer unterhalb einer vorgegebenen Maximaldauer liegt.

Ferner ist denkbar, dass die Übertragung gemäß Schritt a) durch ein Übermitteln (Übertragen) von Daten von dem mobilen Kommunikationsgerät an die wenigstens eine Funkeinheit des Fahrzeuges durchgeführt wird, wobei die Daten für die kennzeichenspezifischen Aufgabeninformation und/oder für eine weitere Aufgabeninformation derart spezifisch sind, dass bei Schritt b) die kennzeichenspezifische Aufgabeninformation und/oder die weitere Aufgabeninformation aus den Daten, vorzugsweise anhand eines geheimen Schlüssels, berechnet wird. Bspw. wird mittels der Daten ein Telegramm oder dergleichen übertragen, welches bspw. Nutzdaten und/oder Steuerdaten (wie eine Prüfsumme oder dergleichen) umfasst. Die Nutzdaten können z. B. eine Zufallszahl umfassen, aus der die kennzeichenspezifische Aufgabeninformation und/oder die weitere Aufgabeninformation berechnet werden können. Hierzu erfolgt z. B. eine Verarbeitung anhand eines geheimen Schlüssels. Der gleiche geheime Schlüssel kann z. B. auch zur Ermittlung des Kennzeichens gemäß Schritt b) und/oder zur Bestimmung einer Lösungsinformation genutzt werden. Die Zufallszahl kann bspw. eine Größe von 2 bis 32 Byte, vorzugsweise 4 bis 16 Byte, bevorzugt 8 Byte aufweisen.

Vorteilhafterweise ist bei einem erfindungsgemäßen Verfahren vorgesehen, dass bei der Übertragung gemäß Schritt a) die kennzeichenspezifische Aufgabeninformation und/oder die weitere Aufgabeninformation mittels genau einer Übertragungsbotschaft, vorzugsweise eines Datenpakets und/oder eines Telegramms, bereitgestellt werden, wobei vorzugsweise aus der Übertragungsbotschaft anhand eines geheimen Schlüssels die kennzeichenspezifische Aufgabeninformation und/oder die weitere Aufgabeninformation ermittelt wird. Insbesondere ist die Übertragungsbotschaft vor der Übertragung für die Funkeinheit unbekannt und/oder basiert auf einer durch das Kommunikationsgerät generierten Zufallszahl, sodass ggf. auch die Aufgabeninformation(en) für die Funkeinheit vor der Übertragung unbekannt sind und/oder auf der Zufallszahl basieren.

Auch ist es möglich, dass Schritt a) die Übertragung als Broadcast und/oder Schritt d) das Aussenden der der Adressierungsinformation als Broadcast umfasst, vorzugsweise an unbestimmte Funkeinheiten.

Gemäß einem weiteren Vorteil kann vorgesehen sein, dass die kennzeichenspezifische Aufgabeninformation und/oder eine weitere Aufgabeninformation und/oder eine Übertragungsbotschaft jeweils wenigstens eine Zufallszahl umfassen, besonders bevorzugt jeweils eine Datenmenge im Bereich von 1 Byte bis 32 Byte, insbesondere 2 Byte bis 16 Byte, vorzugsweise genau 2 oder 4 oder 8 Byte, umfassen. Bspw. kann zur Generierung der jeweiligen Aufgabeninformation und/oder Übertragungsbotschaft zumindest ein Zufallszahlengenerator beim Kommunikationsgerät vorgesehen sein. Dieser Zufallszahlengenerator kann z. B. Teil einer elektronischen Verarbeitungsvorrichtung, wie eines Mikrocontrollers oder dergleichen, sein. Insbesondere ist eine solche Verarbeitungsvorrichtung des Kommunikationsgeräts dazu ausgeführt, die jeweilige Aufgabeninformation gemäß einer jeweiligen kryptografischen Funktion anhand eines jeweiligen geheimen Schlüssels ("Secret Keys") zu verschlüsseln, um so die Sicherheit weiter zu erhöhen.

Vorteilhafterweise kann im Rahmen der Erfindung vorgesehen sein, dass bei Schritt b) die fahrzeugseitige Verarbeitung:
- die Durchführung einer kennzeichenspezifischen kryptografischen Funktion anhand eines geheimen Schlüssels umfasst, um das Kennzeichen zu ermitteln, insbesondere kryptografisch zu berechnen, und vorzugsweise
- eine weitere kryptografische Funktion anhand eines weiteren geheimen Schlüssels umfasst, um eine Lösungsinformation zu ermitteln, insbesondere kryptografisch zu berechnen,
wobei bevorzugt bei Schritt c) die Adressierungsinformation dadurch bestimmt wird, dass die(selbe) kennzeichenspezifische kryptografische Funktion anhand des geheimen Schlüssels durch das mobile Kommunikationsgerät durchgeführt wird, und vorzugsweise eine Vergleichsinformation dadurch bestimmt wird, dass die(selbe) weitere kryptografische Funktion anhand des Weiteren geheimen Schlüssels durch das mobile Kommunikationsgerät durchgeführt wird. Damit ist gewährleistet, dass das Kommunikationsgerät und das Fahrzeug bzw. die jeweilige Funkeinheit unabhängig voneinander bei gemeinsamer Kenntnis des entsprechenden geheimen Schlüssels zu der gleichen Lösung gelangen. Insbesondere sollten bei einer positiven Authentifizierung also die Adressierungsinformation und das Kennzeichen übereinstimmen sowie die Lösungsinformation und die Vergleichsinformation übereinstimmen. Dazu können die kennzeichenspezifische kryptografische Funktion und die weitere kryptografische Funktion identisch oder unterschiedlich sein. Die kryptografischen Funktionen umfassen jeweils bspw. wenigstens eine Hashfunktion, wenigstens einen Verschlüsselungsalgorithmus oder dergleichen.

Gemäß einer vorteilhaften Weiterbildung der Erfindung kann vorgesehen sein, dass die Ermittlung, insbesondere Berechnung, des Kennzeichens und/oder einer Lösungsinformation durch das Fahrzeug (also auch durch die jeweilige Funkeinheit) und/oder der Adressierungsinformation und/oder einer Vergleichsinformation durch das mobile Kommunikationsgerät anhand eines kryptografischen gemeinsamen Geheimnisses erfolgt, welches zumindest einen, vorzugsweise zwei unterschiedliche, geheime Schlüssel umfasst. Insbesondere kann das gemeinsame Geheimnis als ein feststehender Begriff in der Kryptografie ("Shared Secret") aufgefasst werden. Bspw. ist ein erster Schlüssel als ein "kennzeichenspezifischer" Schlüssel für die Ermittlung des Kennzeichens und der Adressierungsinformation vorgesehen, und/oder ein zweiter Schlüssel ist ein "weiterer Schlüssel" zur Ermittlung (Berechnung) der Lösungsinformation und der Vergleichsinformation vorgesehen. Um den wenigstens einen Schlüssel zuverlässig für eine kryptografische Funktion bereitzustellen, kann dieser in einer Speichereinheit der Funkeinheit und/oder in einer Speichervorrichtung des Kommunikationsgeräts gespeichert, vorzugsweise verschlüsselt gespeichert sein.

Ferner kann es im Rahmen der Erfindung vorgesehen sein, dass die Kommunikation gemäß Schritt e) zur Abstandsermittlung eines räumlichen Abstands zwischen dem mobilen Kommunikationsgerät und der (wenigstens einen) Funkeinheit durchgeführt wird, vorzugsweise durch eine Time-of-Flight-Analyse. Hierbei ist es von Vorteil, wenn zur Abstandsermittlung mehrere Funkeinheiten des Fahrzeuges genutzt werden, um die Genauigkeit bei der Ermittlung zu erhöhen. Insbesondere kann diese Abstandsermittlung zur Bestimmung einer sicherheitsrelevanten Information dienen, um zu entscheiden, ob das Kommunikationsgerät positiv durch das Fahrzeug zur Aktivierung einer sicherheitsrelevanten Funktion des Fahrzeuges authentifiziert werden kann und/oder umgekehrt das Fahrzeug bzw. die Funkeinheit des Fahrzeuges positiv durch das Kommunikationsgerät authentifiziert werden kann. Sollte bspw. ein Signal bei der Kommunikation oder der Initiierung der Kommunikation abgefangen werden, z. B. durch ein weiteres Gerät, so tritt eine Verzögerung der Kommunikation auf, welche bei der Abstandsermittlung detektiert werden kann.

Vorteilhafterweise ist es bei dem erfindungsgemäßen Verfahren vorgesehen, dass durch die Kommunikation (gemäß Schritt e), insbesondere nur bei Übereinstimmung der Adressierungsinformation und des ermittelten Kennzeichens, eine Abstandsermittlung anhand der Kommunikation durchgeführt wird, wodurch eine Abstandsinformation über einen Abstand zwischen dem Kommunikationsgerät und dem Fahrzeug ermittelt wird. Die Abstandsermittlung kann z. B. durch Auswertung einer Signalstärke eines Kommunikationssignals der Kommunikation durchgeführt werden.

Besonders zuverlässig und/oder sicher und/oder genau kann die Abstandsermittlung erfolgen, wenn zwischen dem mobilen Kommunikationsgerät und mehreren Funkeinheiten mehrere Kommunikationen durchgeführt werden, also z. B. eine erste Kommunikation mit einer ersten Funkeinheit und eine zweite Kommunikation mit einer zweiten Funkeinheit usw. In diesem Fall kann für jede Kommunikation eine Auswertung der jeweiligen Kommunikationssignale, z. B. mittels der Signalstärke und/oder einer Time-of-Flight-Analyse, durchgeführt werden, um anhand sämtlicher Auswertung die Abstandsinformation über den Abstand zwischen dem Kommunikationsgerät und dem Fahrzeug zu bestimmen.

Es kann möglich sein, dass gemäß einem Schritt f) die Abstandsinformation mit einem Maximalabstand verglichen wird, sodass das Kommunikationsgerät und/oder die Funkeinheit nur dann positiv durch das Fahrzeug bzw. das Kommunikationsgerät authentifiziert wird, wenn der Abstand zwischen Kommunikationsgerät und Fahrzeug diesen Maximalabstand nicht überschreitet. Nur in diesem Fall kann ggf. eine sicherheitsrelevante Funktion des Fahrzeuges aktiviert werden. Damit wird gewährleistet, dass bspw. keine Relay-Station-Attack zur Aktivierung der sicherheitsrelevanten Funktion führt.

Bspw. ist das Fahrzeug als ein Kraftfahrzeug und/oder als ein Personenkraftfahrzeug und/oder als ein Lastkraftfahrzeug und/oder als ein Elektrofahrzeug und/oder als ein Hybridfahrzeug und/oder als ein selbstfahrendes Fahrzeug ausgeführt, vorzugsweise mit einem passiven Zugangssystem und/oder einem Keyless-Go System.

Optional kann es vorgesehen sein, dass die Übertragung gemäß Schritt a) und/oder die Kommunikation gemäß Schritt d) und e) durch Ultrabreitband (UWB) erfolgen, sodass die wenigstens eine Funkeinheit jeweils als UWB-Funkeinheit ausgebildet ist. Ferner kann das Kommunikationsgerät zur Durchführung der Kommunikation gemäß Schritt d) und e) und/oder zur Übertragung gemäß Schritt a) eine Schnittstellenvorrichtung aufweisen, welche z. B. als UWB-Schnittstelle ausgeführt ist. Hierbei kann ggf. eine Bandbreite von mindestens 500 MHz und/oder wenigstens eine Frequenz im Bereich von 1,6 GHz bis 10,6 GHz genutzt werden. Dadurch kann eine Ermittlung und/oder Manipulation der sicherheitsrelevanten Information weiter erschwert werden. Auch ist es möglich, dass die Abstandsermittlung mittels der UWB-Kommunikation erfolgt (hier wird auch von dem sog. "UWB-Ranging" gesprochen), wodurch eine Manipulation der Abstandsinformation deutlich erschwert wird.

Bevorzugt kann im Rahmen der Erfindung vorgesehen sein, dass die Übertragung gemäß Schritt a) als Broadcast an unbestimmte Funkeinheiten des Fahrzeuges durchgeführt wird (d. h. insbesondere ohne eine konkrete Adressierungsinformation und/oder verbindungslos an sämtliche empfangsbereite Funkeinheiten), sodass die kennzeichenspezifische Aufgabeninformation (und insbesondere auch die weitere Aufgabeninformation) durch mehrere Funkeinheiten des Fahrzeuges erhalten und somit vorzugsweise als gemeinsame Basis zur Ermittlung jeweils verschiedener Kennzeichen durch jeweilige fahrzeugseitige Verarbeitungen jeweiliger Funkeinheiten ausgeführt ist. In anderen Worten kann eine einzige kennzeichenspezifische Aufgabeninformation und/oder eine einzige weitere Aufgabeninformation an sämtliche Funkeinheiten (in gleicher Weise) bereitgestellt und/oder dort identisch erhalten werden, und ggf. jeweils durch eine fahrzeugseitige Verarbeitung verarbeitet werden, um ein jeweiliges Kennzeichen und/oder eine jeweilige Lösungsinformation zu ermitteln. Die dabei ermittelten, insbesondere berechneten, Kennzeichen und/oder Lösungsinformationen unterscheiden sich dabei voneinander, da die jeweilige Verarbeitung anhand von wenigstens einer Schlüsselinformation (d. h. bspw. eines geheimen Schlüssels) erfolgt, welche für unterschiedliche Funkeinheiten unterschiedlich ist, wobei vorzugsweise sämtliche Schlüsselinformation im Kommunikationsgerät gespeichert sind und/oder durch das Kommunikationsgerät bekannt sind, um die Funkeinheiten zu authentifizieren. Dies hat den Vorteil, dass auch unterschiedliche Kennzeichen für unterschiedliche Funkeinheiten ermittelt werden, welche somit als Identifikator für die Adressierung zur Initiierung der Kommunikation genutzt werden können. Es kann daher auch möglich sein, dass die jeweilige fahrzeugseitige Verarbeitung für unterschiedliche Funkeinheiten anhand der gleichen kennzeichenspezifischen Aufgabeninformation, und vorzugsweise auch einer gleichen weiteren Aufgabeninformation, erfolgt, und sich lediglich die Schlüsselinformationen für die Verarbeitungen unterscheiden, damit die Verarbeitungen unterschiedliche Ergebnisse liefern. Insbesondere wären sonst bei gleichen Schlüsselinformationen alle Verarbeitungsergebnisse identisch, da vorteilhafterweise die fahrzeugseitige Verarbeitung (ausschließlich) die Schlüsselinformation und die Aufgabeninformationen als Eingabeparameter aufweisen kann.

Es ist ferner vorteilhaft, wenn im Kommunikationsgerät mindestens 5 oder mindestens 10 oder mindestens 20 unterschiedliche Schlüsselinformationen für unterschiedliche Funkeinheiten gespeichert sind. Dabei können auch "quasi auf Vorrat" Schlüsselinformationen im Kommunikationsgerät gespeichert sein, um flexibel mehrere Funkeinheiten am Fahrzeug anzusprechen. Denn die Anzahl der Funkeinheiten am Fahrzeug ist nicht unbedingt vorbekannt und kann von der Fahrzeuggeometrie abhängen. Auch ist auf diese Weise eine flexible Integration auch für verschiedene Fahrzeuge und/oder Zugangssysteme möglich.

Ferner ist es optional vorgesehen, dass gemäß Schritt b) unterschiedliche fahrzeugseitige Verarbeitungen für unterschiedliche Funkeinheiten durchgeführt werden, welche jeweils auf Grundlage der gleichen kennzeichenspezifischen Aufgabeninformation, und vorzugsweise auch einer gleichen weiteren Aufgabeninformation, durchgeführt werden, sodass unterschiedliche Kennzeichen für die unterschiedlichen Funkeinheiten dadurch ermittelt werden, dass die Verarbeitungen anhand unterschiedlicher funkeinheitenspezifischen Informationen, insbesondere geheimen Schlüsseln, durchgeführt werden.

Es kann möglich sein, dass das ermittelte Kennzeichen von der (jeweiligen) Funkeinheit zur Festlegung eines (jeweiligen) Identifikators genutzt wird, welcher zur Adressierung zum Aufbau einer Kommunikation mit der (jeweiligen) Funkeinheit dient. Dieser Identifikator kann z. B. als ein sog. Service Set Identifier (SSID) aufgefasst werden. Es ist dabei denkbar, dass der Identifikator nach außen sichtbar oder versteckt ist. Bspw. kann die Sicherheit erhöht werden, wenn ein Kommunikationsgerät nicht den festgelegten Identifikator abrufen oder empfangen kann, sondern aktiv mittels der Adressierungsinformation die Funkeinheit ansprechen muss. Ferner kann auch diese Adressierungsinformation verschlüsselt und/oder kryptografisch geschützt sein, um darüber die Kommunikation mit der Funkeinheit zu initiieren. Es ist denkbar, dass nur dann die Kommunikation und/oder die Abfrage einer (jeweiligen) Funkeinheit möglich ist, wenn die Adressierungsinformation mit dem Identifikator übereinstimmt, um so die Sicherheit bei der Kommunikation zu gewährleisten.

Des Weiteren ist es im Rahmen der Erfindung optional möglich, dass mehrere Funkeinheiten am Fahrzeug vorgesehen sind, welche jeweils einen veränderbaren Identifikator zur Adressierung bei der Kommunikation gemäß Schritt d) und e) aufweisen, welcher vorzugsweise durch das ermittelte Kennzeichen kryptografisch gebildet wird. Insbesondere kann dazu wenigstens eine kryptografische Funktion zur fahrzeugseitigen Verarbeitung eingesetzt werden, welche dazu ausgebildet ist, anhand der kennzeichenspezifischen Aufgabeninformation und einer funkeinheitsspezifischen Schlüsselinformation ein (eindeutiges) Kennzeichen zu ermitteln. Vorzugsweise ist die Funktion dazu ausgebildet, dass sich die ermittelten Kennzeichen unterschiedlicher Funkeinheiten garantiert voneinander unterscheiden.

Vorzugsweise kann vorgesehen sein, dass eine Durchführung wenigstens einer der Schritte a) bis e) initiiert wird, wenn ein Initiierungssignal, vorzugsweise über eine LF-Funkkommunikation, durch das Kommunikationsgerät, insbesondere als einen ID-Geber, empfangen wird. (LF steht hierbei für Low Frequency.) Es kann sich hierbei z. B. um ein Wecksignal handeln, um die Annäherung des Kommunikationsgeräts an das Fahrzeug zu detektieren. Dies ist insbesondere bei einem passiven (Passive-Entry-) Zugangssystem des Fahrzeuges sinnvoll, da hier die Authentifizierung des Kommunikationsgeräts und/oder eine Aktivierung einer sicherheitsrelevanten Funktion des Fahrzeuges ggf. ohne aktive Bedienung am Kommunikationsgerät automatisch bei der Annäherung erfolgt. Weiter kann es möglich sein, dass als Antwort auf den Empfang des Initiierungssignals ein HF-Signal (HF steht für High Frequency) vom Kommunikationsgerät ausgesendet wird.

Darüber hinaus kann es möglich sein, dass die Übertragung gemäß Schritt a) und/oder die Kommunikation gemäß Schritt d) und e) durch wenigstens eine der nachfolgenden Kommunikationstechnologien durchgeführt wird:
- LF,
- HF,
- WLAN (Wireless Local Area Network),
- Bluetooth,
- Bluetooth Low Energy,
- NFC (Near Field Communication),
- RFID (Radio Frequency Identification),
- Mobilfunk.

Ebenfalls Gegenstand der Erfindung ist ein Funkmodul nach Anspruch 12.

Hierbei ist vorgesehen, dass die Verarbeitungseinheit dazu ausgeführt ist, das Kennzeichen als einen Identifikator für eine Adressierung des Funkmoduls bei einer Kommunikation mit dem mobilen Kommunikationsgerät zu setzen. Dabei kann die Adressierung anhand des Identifikators zwingend erforderlich sein, um eine Kommunikationsverbindung (des Kommunikationsgeräts) mit dem Funkmodul aufzubauen. Bspw. muss hierzu eine Adressierungsinformation an das Funkmodul übertragen werden, wobei das Funkmodul nur dann die Kommunikationsverbindung herstellt, wenn die Adressierungsinformation und das ermittelte Kennzeichen bzw. der Identifikator übereinstimmen. Auch kann es möglich sein, dass der gesetzte Identifikator für das Kommunikationsgerät sichtbar ist, und das Kommunikationsgerät nur mit dem Funkmodul die Kommunikationsverbindung herstellt, dessen Identifikator der Adressierungsinformation entspricht. Ferner kann es möglich sein, dass die Verarbeitungseinheit auch dazu ausgeführt ist, aus der Übertragungsbotschaft die kennzeichenspezifische Aufgabeninformation zu berechnen.

Damit bringt das erfindungsgemäße Funkmodul die gleichen Vorteile mit sich, wie sie ausführlich mit Bezug auf ein erfindungsgemäßes Verfahren beschrieben worden sind.

Ferner kann es im Rahmen der Erfindung vorgesehen sein, dass die Verarbeitungseinheit mit einer elektronischen Speichereinheit elektrisch verbunden ist, um eine (kryptografische und/oder digital gespeicherte) Schlüsselinformation zur Durchführung der fahrzeugseitigen Verarbeitung aus der Speichereinheit auszulesen, wobei vorzugsweise die Schlüsselinformation kryptografisch geheim und dem Funkmodul eindeutig zugeordnet ist. Somit wird gewährleistet, dass nur das Funkmodul die Schlüsselinformation kennen kann, und diese Kenntnis somit zum Nachweis der Berechtigung für die Authentifizierung dienen kann.

Ebenfalls Gegenstand der Erfindung ist ein Kommunikationsgerät (vorzugsweise Identifikationsgeber) nach Anspruch 14 zur Authentifizierung bei einem Fahrzeug, aufweisend:
- eine elektronische Speichervorrichtung, welche mindestens eine (insbesondere kryptografisch geheime) Schlüsselinformation zur Authentifizierung wenigstens einer Funkeinheit des Fahrzeuges gespeichert hat,
- eine elektronische Verarbeitungsvorrichtung, welche mit der Speichervorrichtung elektrisch verbunden und dazu ausgeführt ist, anhand der mindestens einen Schlüsselinformation wenigstens eine Adressierungsinformation zur Adressierung der wenigstens einen Funkeinheit kryptografisch zu ermitteln, vorzugsweise zu berechnen.

Damit bringt das erfindungsgemäße Kommunikationsgerät die gleichen Vorteile mit sich, wie sie ausführlich mit Bezug auf ein erfindungsgemäßes Verfahren und/oder Funkmodul beschrieben worden sind.

Ebenfalls Gegenstand der Erfindung ist ein System, aufweisend:
- ein erfindungsgemäßes Kommunikationsgerät,
- wenigstens ein erfindungsgemäßes Funkmodul, welches jeweils die Funkeinheit ausbildet.

Hierbei ist vorgesehen, dass das System zur Durchführung eines erfindungsgemäßen Verfahrens ausgebildet ist. Damit bringt das erfindungsgemäße System die gleichen Vorteile mit sich, wie sie ausführlich mit Bezug auf ein erfindungsgemäßes Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine schematische Draufsicht auf ein Fahrzeug mit einem erfindungsgemäßen System,
- Fig. 2: eine schematische Darstellung eines erfindungsgemäßen Funkmoduls,
- Fig. 3: eine Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

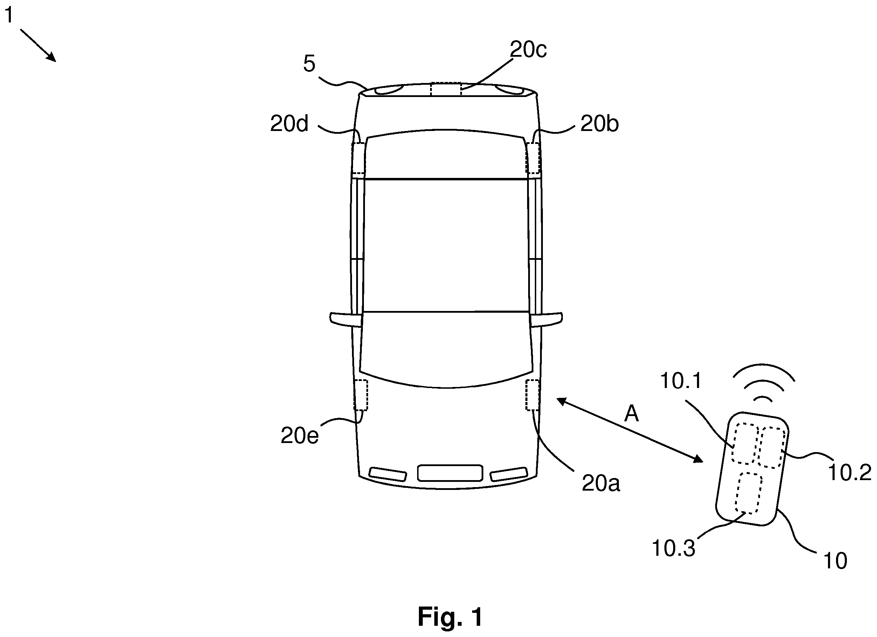

In Figur 1 sind schematisch ein erfindungsgemäßes System 1 und ein Fahrzeug 5 in einer Draufsicht gezeigt. Das Fahrzeug 5 kann dabei mehrere Funkeinheiten 20, insbesondere Funkmodule 20, aufweisen. Beispielhaft sind fünf Funkeinheiten 20 gezeigt, wobei eine erste und zweite Funkeinheit 20a, 20b auf der linken Fahrzeugseite, eine dritte Funkeinheit 20c im Heckbereich und eine vierte und fünfte Funkeinheit 20d, 20e auf der rechten Fahrzeugseite angeordnet sind. Damit ist es möglich, eine Kommunikation mit einem mobilen Kommunikationsgerät 10 besonders zuverlässig von unterschiedlichen Richtungen durchzuführen.

Die Funkeinheiten 20 können dabei Teil eines passiven Zugangssystems (passive entry system) des Fahrzeuges 5 sein, welches es ermöglicht, ohne aktive manuelle Betätigung eines ID-Gebers eine Schließvorrichtung des Fahrzeuges 5 zu entriegeln. Gemäß dem gezeigten Ausführungsbeispiel kann es zur Entriegelung der Schließvorrichtung ausreichen, dass das mobile Kommunikationsgerät 10 als ID-Geber 10 in die Nähe des Fahrzeuges gelangt. Vorausgesetzt wird allerdings, dass eine erfolgreiche Authentifizierung mit dem ID-Geber 10 durchgeführt wird, und ein Abstand A zwischen dem ID-Geber 10 und dem Fahrzeug 5 innerhalb eines Maximalabstands liegt. Für die Gewährleistung dieser Voraussetzungen, und insbesondere zur kryptografischen Absicherung, kann ein erfindungsgemäßes Verfahren 100 einen entscheidenden Beitrag leisten.

Bei einer Annäherung an das Fahrzeug 5 kann es zunächst vorgesehen sein, dass das mobile Kommunikationsgerät 10 (also der ID-Geber) ein Funksignal vom Fahrzeug 5 empfängt, z. B. ein LF (Low Frequency) Funksignal. Dieses kann einen Authentifizierungsvorgang und das sog. "Ranging", also die Abstandsermittlung des Abstands A, auslösen. Von Vorteil ist es dabei, wenn die Abstandsermittlung anhand einer Kommunikation, also bspw. durch die Erfassung einer Signalstärke oder einer Ermittlung einer Signallaufzeit (Time-of-Flight-Analyse) durchgeführt wird. Es ist dargestellt, dass das mobile Kommunikationsgerät 10 zur Durchführung der Kommunikation wenigstens eine Schnittstellenvorrichtung 10.1 aufweist, welche bspw. als Funkschnittstelle, vorzugsweise Ultrabreitbandschnittstelle, ausgeführt ist. Auch können weitere Schnittstellen, z. B. eine LF-Funkschnittstelle, in das Kommunikationsgerät 10 integriert sein. Zur kryptografischen Verarbeitung ist wenigstens eine Verarbeitungsvorrichtung 10.3 vorgesehen, z. B. ein integrierter Schaltkreis, ein Mikrocontroller oder dergleichen. Für die Speicherung insbesondere von kryptografischen Informationen ist eine Speichervorrichtung 10.2 vorgesehen, welche zur persistenten Speicherung von Daten ausgeführt ist.

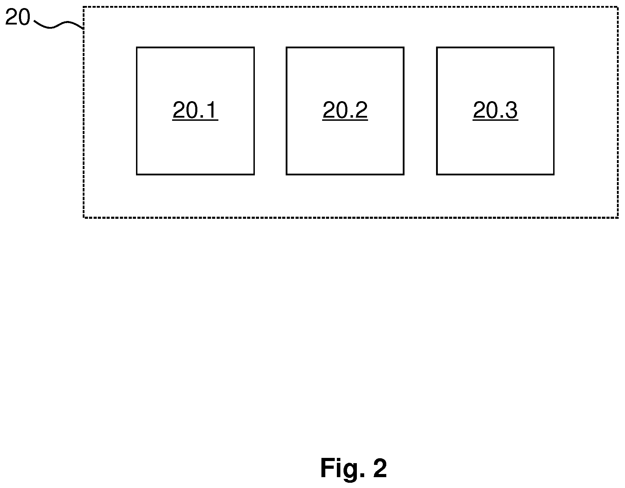

Für die Durchführung des erfindungsgemäßen Verfahrens 100 ist es besonders sinnvoll, wenn sowohl das mobile Kommunikationsgerät 10 als auch die jeweilige Funkeinheit 20 (also das Funkmodul 20) wenigstens eine kryptografische Funktion anhand wenigstens einer Schlüsselinformation durchführen können. Daher umfasst auch die jeweilige Funkeinheit 20 entsprechend dazu geeignete Komponenten. In Figur 2 ist schematisch gezeigt, dass die Funkeinheit 20 bzw. das erfindungsgemäße Funkmodul 20 wenigstens eine Verarbeitungseinheit 20.3 aufweisen kann, welche mit einer Speichereinheit 20.2 verbunden sein kann. Darüber hinaus ist zur Kommunikation mit dem Kommunikationsgerät 10 eine geeignete Sende-Empfangs-Vorrichtung 20.1 vorgesehen. Vorteilhafterweise ist diese auch zur Funkkommunikation über Ultrabreitband (UWB) ausgebildet.

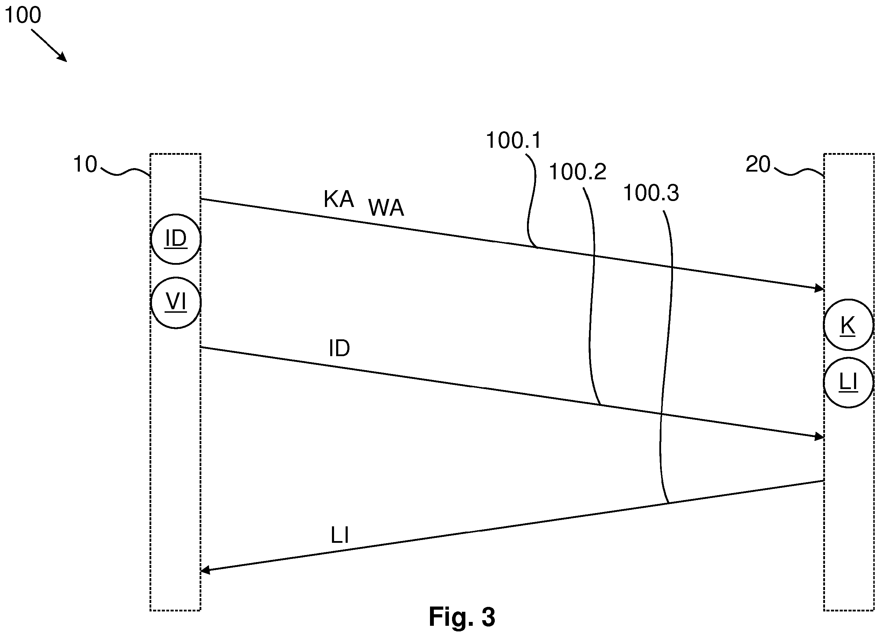

In Figur 3 ist das erfindungsgemäße Verfahren 100 mit weiteren Details schematisch visualisiert. Hierfür ist ein zeitlicher Ablauf von drei Übertragungsvorgängen 100.1, 100.2 und 100.3 dargestellt, welche zeitlich nacheinander zwischen einem (einzigen) mobilen Kommunikationsgerät 10 und exemplarisch einer Funkeinheit 20 erfolgen. Die Funkeinheit 20 steht hierbei repräsentativ für sämtliche Funkeinheiten 20 des Fahrzeuges 5. Das Kommunikationsgerät 10 ist separat vom Fahrzeug 5 ausgebildet, sodass die Übertragung bspw. über Funk, insbesondere über UWB erfolgt. Beispielhafte Ausführungen für das Kommunikationsgerät 10 sind ein Smartphone oder ein elektronischer Schlüssel für das Fahrzeug 5, welche zur Authentifizierung beim Fahrzeug 5 und damit als ID-Geber genutzt werden können. In anderen Worten dient das Kommunikationsgerät 10 zur Authentifizierung beim Fahrzeug 5, also zum Nachweis der Berechtigung, eine sicherheitsrelevante Fahrzeugfunktion aktivieren zu können. Eine solche ist bspw. ein Öffnen der Heckklappe und/oder ein Entriegeln einer Schließvorrichtung des Fahrzeuges 5. Zur Authentifizierung sind diverse Methoden bekannt, bspw. die Übertragung eines Codes vom ID-Geber 10 an das Fahrzeug 5, insbesondere über die UWB-Kommunikation zwischen dem ID-Geber 10 und der Funkeinheit 20, wobei anschließend der Code an eine Fahrzeugelektronik übertragen werden kann, um die Authentifizierung abzuschließen. Nachfolgend wird ein Vorgehen beschrieben, um eine solche Kommunikation, welche bspw. zur Authentifizierung des ID-Gebers 10 am Fahrzeug 5 dient, abzusichern.

Grundsätzlich kann eine Authentifizierung des als ID-Geber eingesetzten Kommunikationsgeräts 10 beim Fahrzeug 5 durch einen Datenaustausch mit einer Funkschnittstelle, hier eine Funkeinheit 20, des Fahrzeuges 5 erfolgen. Hinsichtlich der Absicherung dieser Kommunikation ist es sinnvoll, wenn vor der Authentifizierung des ID-Gebers sichergestellt wird, dass die Funkeinheit 20 berechtigt ist, die Authentifizierung durchzuführen. In anderen Worten muss eine weitere Authentifizierung der Funkeinheit 20 beim Kommunikationsgerät 10 durchgeführt werden. Auf diese Weise kann verhindert werden, dass eine unberechtigte Codeabfrage erfolgt. Es kann möglich sein, dass diese weitere Authentifizierung mittels eines Challenge-Response-Verfahrens durchgeführt wird.

Das erfindungsgemäße Verfahren bietet eine noch weitergehende Absicherung, da auch eine unberechtigte Ermittlung und ggf. eine Manipulation dieser weiteren Authentifizierung der Funkeinheit 20 zumindest erschwert wird.

In einem ersten Schritt wird dabei eine erste Übertragung 100.1, insbesondere erste Datenübertragung 100.1, zur Bereitstellung wenigstens einer kennzeichenspezifischen Aufgabeninformation KA von dem mobilen Kommunikationsgerät 10 an die Funkeinheit 20 durchgeführt.

Es kann sich dabei um einen Broadcast handeln, sodass die kennzeichenspezifische Aufgabeninformation KA an unbestimmte Funkeinheiten 20 des Fahrzeuges 5 (d. h. ohne konkrete Adressierung) bereitgestellt wird. Neben der kennzeichenspezifischen Aufgabeninformation KA kann auch wenigstens eine weitere Aufgabeninformation WA von dem mobilen Kommunikationsgerät 10 an die Funkeinheit 20 bereitgestellt werden, ggf. ebenfalls als Broadcast an sämtliche Funkeinheiten 20 des Fahrzeuges 5. Sowohl die kennzeichenspezifische Aufgabeninformation KA als auch die wenigstens eine weitere Aufgabeninformation WA können ggf. auch gemeinsam mittels der Übertragung eines einzigen Datenpakets bereitgestellt werden. In anderen Worten können die kennzeichenspezifische Aufgabeninformation KA und auch die weitere Aufgabeninformation WA auf einem gleichen Datensatz z. B. einer Übertragungsbotschaft basieren. Bei der Übertragung gemäß Schritt a) kann somit ggf. nicht zwischen den Aufgabeninformationen KA, WA unterschieden werden. Um daraus die sich unterscheidenden Aufgabeninformationen KA, WA zu ermittelt, können (z. B. durch die Funkeinheit) aus dem gleichen Datenpaket sowohl die kennzeichenspezifische Aufgabeninformation KA als auch die weitere Aufgabeninformation WA gemäß unterschiedlicher Verarbeitungsmethoden berechnet werden. Bei der kennzeichenspezifischen Aufgabeninformation KA handelt es sich z. B. um eine "ID Challenge", welche ein Kennzeichen der Funkeinheit 20 betrifft. Bei der weiteren Aufgabeninformation WA handelt es sich z. B. um eine Challenge im Rahmen eines Challenge-Response-Verfahrens zur Authentifizierung der Funkeinheit 20. Bspw. umfasst die Aufgabeninformation KA und/oder WA wenigstens eine 2 Byte oder 4 Byte Zufallszahlenfolge. Das Übertragen setzt also voraus, dass zuvor eine Basis (wie die Übertragungsbotschaft) für die jeweilige Aufgabeninformation ermittelt wurde, z. B. durch einen Zufallszahlengenerator des Kommunikationsgeräts 10. Weiter ist es dem Übertragen mittels Broadcast immanent, dass die Übertragungsbotschaft für sämtliche Empfänger, also die jeweiligen Funkeinheiten 20, gleich ist.

Nach dieser ersten Übertragung 100.1 zur Bereitstellung der Aufgabeninformation KA bzw. WA erfolgt die Vorbereitung für eine zweite Übertragung 100.2, insbesondere zweite Datenübertragung 100.2. Hierzu wird eine fahrzeugseitige Verarbeitung durchgeführt, welche z. B. durch die jeweilige Funkeinheit 20 (z. B. durch eine jeweilige Verarbeitungseinheit 20.3) und/oder durch eine Fahrzeugelektronik bereitgestellt werden kann. Hierbei wird für jede Funkeinheit 20 wenigstens eine zugehörige Schlüsselinformation genutzt. Bspw. kann ein (erster) geheimer Schlüssel und vorzugsweise ein weiterer geheimer Schlüssel für jede Funkeinheit 20 genutzt werden. Bevorzugt sind dabei der (erste) geheime Schlüssel und/oder der weitere geheime Schlüssel in einer Speichereinheit 20.2 einer jeweiligen Funkeinheit 20 nicht-flüchtig gespeichert. Dabei können (erste bzw. weitere) Schlüssel unterschiedlicher Funkeinheiten 20 sich voneinander unterscheiden oder gleich sein. Jede Funkeinheit 20 führt sodann anhand der bereitgestellten (d. h. der erhaltenen) Aufgabeninformation KA und/oder WA und anhand der Schlüsselinformation eine kryptografische Funktion aus, um ein Kennzeichen K und insbesondere auch eine Lösungsinformation LI zu ermitteln, insbesondere zu berechnen.

Bspw. ist die kryptografische Funktion eine Verschlüsselung. Dann wird bei der fahrzeugseitigen Verarbeitung die kennzeichenspezifische Aufgabeninformation KA anhand des (ersten) Schlüssels verschlüsselt, um ein Kennzeichen K zu ermitteln, insbesondere zu berechnen. Diese Ermittlung (Berechnung) wird durch sämtliche Funkeinheiten 20 durchgeführt, welche die kennzeichenspezifischen Aufgabeninformation KA erhalten haben. Die dabei ermittelten Kennzeichen K unterscheiden sich voneinander, weil z. B. die Schlüssel unterschiedlich sind. Auch kann bei der fahrzeugseitigen Verarbeitung die weitere Aufgabeninformation WA anhand des (ersten) Schlüssels oder eines weiteren Schlüssels verschlüsselt werden, um eine Lösungsinformation LI zu ermitteln, insbesondere zu berechnen. Diese Ermittlung (Berechnung) kann ebenfalls durch sämtliche Funkeinheiten 20 durchgeführt werden, welche die weitere Aufgabeninformation WA erhalten haben. Auch hierbei können sich die ermittelten Lösungsinformationen LI voneinander unterscheiden.

Von Vorteil ist es also, wenn sich die ermittelten Kennzeichen K und/oder die ermittelten Lösungsinformationen LI verschiedener Funkeinheiten 20 (und somit verschiedener Verarbeitungen) voneinander unterscheiden. Dies kann dadurch gewährleistet werden, dass wie erwähnt sich die Schlüsselinformationen unterscheiden und/oder ein weiterer Parameter der kryptografischen Funktion sich unterscheidet.

Von besonderer Bedeutung kann sein, dass die Verarbeitungsstrategie und sämtliche hierzu notwendigen Information zur Bestimmung des Kennzeichens K bzw. der Lösungsinformation LI, also bspw. die konkrete kryptografische Funktion, wie der Verschlüsselungsalgorithmus oder eine Hashfunktion, und die Parameter zur Ermittlung (Berechnung), dem Kommunikationsgerät 10 für sämtliche berechtigten Funkeinheiten 20 des Fahrzeuges 5 bekannt sind. Bspw. kann im Kommunikationsgerät 10, z. B. in einer Speichervorrichtung 10.2, jeder geheime Schlüssel der Funkeinheiten 20 gespeichert sein. Im Sinne eines Challenge-Response-Verfahrens kann dann das Kommunikationsgerät 10 unabhängig von den Funkeinheiten 20 und den jeweiligen Verarbeitungen eine gleichartige Ermittlung (insbesondere Berechnung) durchführen. Ein Ergebnis einer solchen Ermittlung (bzw. Berechnung) anhand der kennzeichenspezifischen Aufgabeninformation KA wird nachfolgend Adressierungsinformation ID bezeichnet, und ein Ergebnis einer solchen Ermittlung (bzw. Berechnung) anhand der weiteren Aufgabeninformation WA wird nachfolgenden Vergleichsinformation VI bezeichnet.

Um bei dem Beispiel der Verschlüsselung als kryptografische Funktion zu bleiben, kann das Kommunikationsgerät 10 unabhängig von der fahrzeugseitigen Verarbeitung ebenfalls die kennzeichenspezifische Aufgabeninformation KA anhand des (ersten) Schlüssels verschlüsseln, um eine Adressierungsinformation ID zu ermitteln, insbesondere zu berechnen (welche ggf. dem fahrzeugseitig ermittelten Kennzeichen K inhaltlich entspricht). Diese Ermittlung (bzw. Berechnung) kann durch das Kommunikationsgerät 10 für sämtliche berechtigte Funkeinheiten 20, also mit den entsprechenden unterschiedlichen Schlüsseln und/oder Parametern dieser Funkeinheiten 20 durchgeführt werden. Die dabei ermittelten (berechneten) Adressierungsinformationen ID unterscheiden sich somit voneinander, weil z. B. die Schlüssel für unterschiedliche Funkeinheiten 20 unterschiedlich sind. Auch kann bei dieser kommunikationsgeräteseitigen Ermittlung (bzw. Berechnung) die weitere Aufgabeninformation WA anhand des (ersten) Schlüssels oder eines weiteren Schlüssels für jeweilige Funkeinheiten 20 verschlüsselt werden, um eine jeweilige Vergleichsinformation VI (entsprechend der Lösungsinformation LI) zu ermitteln, insbesondere zu berechnen. Diese Ermittlung (bzw. Berechnung) kann ebenfalls für sämtliche berechtigte Funkeinheiten 20 durchgeführt werden. Auch hierbei können sich die ermittelten Lösungsinformationen LI voneinander unterscheiden. Sind die Ergebnisse der Ermittlungen (bzw. Berechnungen) des Kommunikationsgeräts 10 und der jeweiligen Funkeinheit 20 identisch, konnte die Funkeinheit 20 erfolgreich authentifiziert werden.

Zur Feststellung, dass die Authentifizierung der Funkeinheit 20 erfolgreich war, ist ein besonderes Vorgehen gemäß der zweiten Übertragung 100.2 vorgesehen. Herkömmlicherweise würde beim Challenge-Response-Verfahren ein Übertragen des Ergebnisses, also vorliegend des ermittelten Kennzeichens K von der Funkeinheit 20 zum Kommunikationsgerät 10, erfolgen. Dieses würde es normalerweise ermöglichen, dass das Kommunikationsgerät 10 überprüfen kann, ob die Funkeinheit 20 zum richtigen Ergebnis gelangt ist, also berechtigt ist. Erfindungsgemäß kann indes auf eine solche Datenübertragung verzichtet werden. Hierzu nutzt die jeweilige Funkeinheit 20 das jeweils ermittelte Kennzeichen K zur Festlegung eines Identifikators, über den die jeweilige Funkeinheit 20 bei einer Kommunikation gezielt angesprochen werden kann. Im einfachsten Fall kann dabei das ermittelte Kennzeichen K dem Identifikator entsprechen. Bei der zweiten Übertragung 100.2 initiiert das Kommunikationsgerät 10 eine Kommunikation mit einer jeweiligen Funkeinheit 20 über eine jeweilige Adressierungsinformation ID. Diese entspricht im Falle einer positiven Berechtigung dem jeweiligen Kennzeichen K. Auf diese Weise adressiert das Kommunikationsgerät 10 zwar über einen Broadcast ggf. sämtliche Funkeinheiten 20, die weitere Kommunikation gemäß Schritt e) wird aber nur für diejenigen Funkeinheiten 20 initiiert, welche sich selbst den "richtigen" Identifikator gesetzt haben, welcher der Adressierungsinformation ID entspricht. An andere unberechtigte Funkeinheiten 20 findet zwar ggf. eine Übertragung statt (per Broadcast), jedoch keine Initiierung der Kommunikation, sodass auf diese Weise ein unberechtigtes Einwirken verhindert werden kann, da nur eine berechtigte Antwort schnell genug erfolgen kann im Gegensatz zu unberechtigten Antworten.

Anschließend kann eine dritte Übertragung 100.3, insbesondere dritte Datenübertragung 100.3, von der Funkeinheit 20 zum Kommunikationsgerät 10 genutzt werden, um eine Laufzeitanalyse zur Abstandsermittlung des Abstands A durchzuführen. Hierbei kann, um die Sicherheit weiter zu erhöhen, die Lösungsinformation LI einer jeweiligen Funkeinheit 20 an das Kommunikationsgerät 10 übertragen werden. Dieses kann die jeweilige Lösungsinformation LI mit der jeweiligen Vergleichsinformation VI vergleichen, um ebenfalls die Berechtigung zu überprüfen.

Zwischen einer ersten Übertragung 100.1 und zweiten Übertragung 100.2 können z. B. 2 ms liegen, sodass genügend Zeit für die Funkeinheit 20 bzw. das Kommunikationsgerät 10 besteht, um die Ermittlungen (bzw. Berechnungen) durchzuführen. Die Zeit zwischen einer zweiten Übertragung 100.2 und einer dritten Übertragung 100.3 beträgt z. B. 700 µs, und hängt vorrangig vom Abstand A ab. Entsprechend kann anhand der Zeitspanne zwischen der ersten und zweiten Übertragung 100.2, 100.3 der Abstand A ermittelt werden.

Die voranstehende Erläuterung der Ausführungsformen beschreibt die vorliegende Erfindung ausschließlich im Rahmen von Beispielen.

### Bezugszeichenliste

- 1: System
- 5: Fahrzeug

- 10: Kommunikationsgerät, ID-Geber
- 10.1: Schnittstellenvorrichtung
- 10.2: Speichervorrichtung
- 10.3: Verarbeitungsvorrichtung

- 20: Funkeinheit, UWB-Modul
- 20.1: Sende-Empfangs-Vorrichtung, Funkschnittstelle
- 20d: vierte Funkeinheit
- 20e: fünfte Funkeinheit
- 20.2: Speichereinheit
- 20.3: Verarbeitungseinheit
- 20a: erste Funkeinheit
- 20b: zweite Funkeinheit
- 20c: dritte Funkeinheit

- 100: Verfahren
- 100.1: erste Übertragung
- 100.2: zweite Übertragung
- 100.3: dritte Übertragung

- A: Abstand
- ID: Adressierungsinformation
- K: Kennzeichen
- KA: kennzeichenspezifischen Aufgabeninformation
- LI: Lösungsinformation
- VI: Vergleichsinformation
- WA: weitere Aufgabeninformation

## Patentansprüche

1. Verfahren (100) zur Absicherung einer Kommunikation zwischen einem mobilen Kommunikationsgerät (10) und einem Fahrzeug (5), insbesondere zur Authentifizierung bei einem passiven Zugangssystem des Fahrzeugs (5), wobei das Fahrzeug (5) wenigstens eine Funkeinheit (20) aufweist,
aufweisend die nachfolgenden Schritte:
a) Durchführen einer Übertragung zur Bereitstellung wenigstens einer kennzeichenspezifischen Aufgabeninformation (KA) von dem mobilen Kommunikationsgerät (10) an die wenigstens eine Funkeinheit (20) des Fahrzeuges (5),
b) Durchführen einer fahrzeugseitigen Verarbeitung der kennzeichenspezifischen Aufgabeninformation (KA), um ein Kennzeichen (K) für die Funkeinheit (20) zu ermitteln,
c) Bestimmen einer Adressierungsinformation (ID) durch das mobile Kommunikationsgerät (10) unabhängig von der fahrzeugseitigen Verarbeitung,
d) Initiieren einer Kommunikation anhand der Adressierungsinformation (ID) durch das mobile Kommunikationsgerät (10),
e) Durchführen der Kommunikation zwischen dem mobilen Kommunikationsgerät (10) und der Funkeinheit (20), wenn die Adressierungsinformation (ID) mit dem ermittelten Kennzeichen (K) übereinstimmt.

2. Verfahren (100) nach Anspruch 1,
**dadurch gekennzeichnet,**
**dass** bei Schritt a) die kennzeichenspezifische Aufgabeninformation (KA) durch die Übertragung von Daten bereitgestellt wird, aus denen die kennzeichenspezifische Aufgabeninformation (KA) ermittelt wird, und aus denen ebenfalls eine weitere Aufgabeninformation (WA) ermittelt wird, wobei sich die weitere Aufgabeninformation (WA) von der kennzeichenspezifischen Aufgabeninformation (KA) unterscheidet, und bei Schritt b) durch die fahrzeugseitige Verarbeitung der weiteren Aufgabeninformation (WA) eine Lösungsinformation (LI) ermittelt wird, wobei die Lösungsinformation (LI) zur Authentifizierung der Funkeinheit (20) mittels der Kommunikation gemäß Schritt e) von der Funkeinheit (20) an das mobile Kommunikationsgerät (10) übertragen wird, und sodann vorzugsweise durch das mobile Kommunikationsgerät (10) mit einer Vergleichsinformation (VI) verglichen wird, um anhand des Vergleichs die Identität der Funkeinheit (20) zu bestätigen,
und/oder dass die kennzeichenspezifische Aufgabeninformation (KA) eine Challenge und das ermittelte Kennzeichen (K) eine Response gemäß einem Challenge-Response-Verfahren sind, und vorzugsweise zusätzlich die "eine weitere Aufgabeninformation (WA) als weitere Challenge und die Lösungsinformation (LI) als weitere Response gemäß einem Challenge-Response-Verfahren bereitgestellt werden.

3. Verfahren (100) nach einem der vorhergehenden Ansprüche,
**dadurch gekennzeichnet,**
**dass** die kennzeichenspezifische Aufgabeninformation (KA) für eine, insbesondere geheime, Zufallszahl spezifisch ist, welche insbesondere durch das mobile Kommunikationsgerät (10) generiert wird, und vorzugsweise verschlüsselt gemäß Schritt a) durch eine Datenübertragung an die wenigstens eine Funkeinheit (20) übertragen wird, wobei bevorzugt das Ermitteln des Kennzeichens (K) gemäß Schritt b) und das Bestimmen der Adressierungsinformation (ID) gemäß Schritt c) anhand der Aufgabeninformation (KA) und somit anhand der gleichen Zufallszahl erfolgt, sodass die Adressierungsinformation (ID) und das Kennzeichen (K) gleich sind.

4. Verfahren (100) nach einem der vorhergehenden Ansprüche,
**dadurch gekennzeichnet,**
**dass** das Initiieren der Kommunikation gemäß Schritt d) mittels einer Datenübertragung der Adressierungsinformation (ID), vorzugsweise per Broadcast, erfolgt, wobei die Absicherung der Kommunikation in Abhängigkeit von einem Zeitpunkt dieser Datenübertragung erfolgt, vorzugsweise in Abhängigkeit von einer zeitlichen Dauer zwischen dieser Datenübertragung und einer weiteren Datenübertragung der Kommunikation.

5. Verfahren (100) nach einem der Ansprüche 2 bis 4,
**dadurch gekennzeichnet,**
**dass** die Übertragung gemäß Schritt a) durch ein Übermitteln von Daten von dem mobilen Kommunikationsgerät (10) an die wenigstens eine Funkeinheit (20) des Fahrzeuges (5) durchgeführt wird, wobei die Daten für die kennzeichenspezifischen Aufgabeninformation (KA) und/oder für die weitere Aufgabeninformation (WA) derart spezifisch sind, dass bei Schritt b) die kennzeichenspezifische Aufgabeninformation (KA) und/oder die weitere Aufgabeninformation (WA) aus den Daten, vorzugsweise anhand eines geheimen Schlüssels, berechnet wird,
und/oder dass bei der Übertragung gemäß Schritt a) die kennzeichenspezifische Aufgabeninformation (KA) und/oder die weitere Aufgabeninformation (WA) mittels genau einer Übertragungsbotschaft, vorzugsweise eines Datenpakets, bereitgestellt werden,
wobei vorzugsweise aus der Übertragungsbotschaft anhand eines geheimen Schlüssels die Aufgabeninformation (KA) und/oder die weitere Aufgabeninformation (WA) ermittelt wird,
und/oder dass Schritt a) die Übertragung als Broadcast und/oder Schritt d) das Aussenden der der Adressierungsinformation (ID) als Broadcast umfasst, vorzugsweise an unbestimmte Funkeinheiten (10).

6. Verfahren (100) nach einem der Ansprüche 2 bis 5,
**dadurch gekennzeichnet,**
**dass** die kennzeichenspezifische Aufgabeninformation (KA) und/oder die weitere Aufgabeninformation (WA) und/oder eine Übertragungsbotschaft jeweils wenigstens eine Zufallszahl umfassen, besonders bevorzugt jeweils umfassend eine Datenmenge im Bereich von 1 Byte bis 36 Byte, insbesondere 2 Byte bis 16 Byte, vorzugsweise genau 2 oder 4 oder 8 Byte.

7. Verfahren (100) nach einem der Ansprüche 2 bis 6,
**dadurch gekennzeichnet,**
**dass** bei Schritt b) die fahrzeugseitige Verarbeitung die Durchführung einer kennzeichenspezifischen kryptografischen Funktion anhand eines geheimen Schlüssels umfasst, um das Kennzeichen (K) zu ermitteln, insbesondere kryptografisch zu berechnen, und vorzugsweise eine weitere kryptografische Funktion anhand eines weiteren geheimen Schlüssels umfasst, um die Lösungsinformation (LI) zu ermitteln,
insbesondere kryptografisch zu berechnen, und bei Schritt c) die Adressierungsinformation (ID) dadurch bestimmt wird, dass die kennzeichenspezifische kryptografische Funktion anhand des geheimen Schlüssels durch das mobile Kommunikationsgerät (10) durchgeführt wird, und vorzugsweise eine Vergleichsinformation (VI) dadurch bestimmt wird, dass die weitere kryptografische Funktion anhand des weiteren geheimen Schlüssels durch das mobile Kommunikationsgerät (10) durchgeführt wird.

8. Verfahren (100) nach einem der Ansprüche 2 bis 7,
**dadurch gekennzeichnet,**
**dass** die Ermittlung, insbesondere Berechnung, des Kennzeichens (K) und/oder der Lösungsinformation (LI) durch das Fahrzeug (5) und/oder der Adressierungsinformation (ID) und/oder einer Vergleichsinformation (VI) durch das mobile Kommunikationsgerät (10) anhand eines kryptografischen gemeinsamen Geheimnisses erfolgt, welches zumindest einen, vorzugsweise zwei unterschiedliche, geheime Schlüssel umfasst,
und/oder dass die Kommunikation gemäß Schritt e) zur Abstandsermittlung eines räumlichen Abstands (A) zwischen dem mobilen Kommunikationsgerät (10) und der Funkeinheit (20) durchgeführt wird, vorzugsweise durch eine Time-of-Flight-Analyse.

9. Verfahren (100) nach einem der vorhergehenden Ansprüche,
**dadurch gekennzeichnet,**
**dass** die Übertragung gemäß Schritt a) und/oder die Kommunikation gemäß Schritt d) und e) durch Ultrabreitband erfolgen, sodass die wenigstens eine Funkeinheit (20) jeweils als UWB-Funkeinheit (20) ausgebildet ist,
und/oder dass die Übertragung gemäß Schritt a) als Broadcast an unbestimmte Funkeinheiten (20) des Fahrzeuges (5) durchgeführt wird, sodass die kennzeichenspezifische Aufgabeninformation (KA) durch mehrere Funkeinheiten (20) des Fahrzeuges (5) erhalten und somit als gemeinsame Basis zur Ermittlung jeweils verschiedener Kennzeichen (K) durch jeweilige fahrzeugseitige Verarbeitungen jeweiliger Funkeinheiten (20) ausgeführt ist.

10. Verfahren (100) nach einem der Ansprüche 2 bis 9,
**dadurch gekennzeichnet,**
**dass** gemäß Schritt b) unterschiedliche fahrzeugseitige Verarbeitungen für unterschiedliche Funkeinheiten (20) durchgeführt werden, welche jeweils auf Grundlage der gleichen kennzeichenspezifischen Aufgabeninformation (KA), und vorzugsweise auch der gleichen weiteren Aufgabeninformation (WA), durchgeführt werden, sodass unterschiedliche Kennzeichen (K) für die unterschiedlichen Funkeinheiten (20) dadurch ermittelt werden, dass die Verarbeitungen anhand unterschiedlicher funkeinheitenspezifischen Informationen, insbesondere geheimen Schlüsseln, durchgeführt werden.

11. Verfahren (100) nach einem der vorhergehenden Ansprüche,
**dadurch gekennzeichnet,**
**dass** mehrere Funkeinheiten (20) am Fahrzeug (5) vorgesehen sind, welche jeweils einen veränderbaren Identifikator zur Adressierung bei der Kommunikation gemäß Schritt d) und e) aufweisen, welcher vorzugsweise durch das ermittelte Kennzeichen (K) kryptografisch gebildet wird,
und/oder dass eine Durchführung wenigstens einer der Schritte a) bis e) initiiert wird, wenn ein Initiierungssignal, vorzugsweise über eine LF-Funkkommunikation, durch das Kommunikationsgerät (10), insbesondere als einen ID-Geber (10), empfangen wird.

12. Funkmodul (20), aufweisend:
- eine Sende-Empfangs-Vorrichtung (20.1) zum Empfangen einer für die kennzeichenspezifische Aufgabeninformation (KA) spezifischen Übertragungsbotschaft von einem mobilen Kommunikationsgerät (10) über Funk, vorzugsweise über Ultrabreitband,
- eine elektronische Verarbeitungseinheit (20.3) zur Durchführung einer fahrzeugseitigen Verarbeitung der kennzeichenspezifischen Aufgabeninformation (KA), um ein Kennzeichen (K) für das Funkmodul (20) zu ermitteln,
wobei die Verarbeitungseinheit (20.3) dazu ausgeführt ist, das Kennzeichen (K) als einen Identifikator für eine Adressierung des Funkmoduls (20) bei einer Kommunikation mit dem mobilen Kommunikationsgerät (10) zu setzen,
wobei das Funkmodul (20) als Funkeinheit (20) gemäß einem Verfahren (100) nach einem der vorhergehenden Ansprüche ausgebildet ist.

13. Funkmodul (20) nach Anspruch 12,
**dadurch gekennzeichnet,**
**dass** die Verarbeitungseinheit (20.3) mit einer elektronischen Speichereinheit (20.2) elektrisch verbunden ist, um eine Schlüsselinformation zur Durchführung der fahrzeugseitigen Verarbeitung aus der Speichereinheit (20.2) auszulesen, wobei die Schlüsselinformation kryptografisch geheim und dem Funkmodul (20) eindeutig zugeordnet ist.

14. Mobiles Kommunikationsgerät (10) zur Authentifizierung bei einem Fahrzeug (5), aufweisend:
- eine elektronische Speichervorrichtung (10.2), welche mindestens eine Schlüsselinformation zur Authentifizierung wenigstens einer Funkeinheit (20) des Fahrzeuges (5) gespeichert hat,
- eine elektronische Verarbeitungsvorrichtung (10.3), welche mit der Speichervorrichtung (10.2) elektrisch verbunden und dazu ausgeführt ist, anhand der mindestens einen Schlüsselinformation wenigstens eine Adressierungsinformation (ID) zur Adressierung der wenigstens einen Funkeinheit (20) kryptografisch zu ermitteln,
wobei das Kommunikationsgerät (10) zur Durchführung eines Verfahrens (100) nach einem der Ansprüche 1 bis 11 ausgebildet ist.

15. System (1), aufweisend:
- ein mobiles Kommunikationsgerät (10) nach Anspruch 14,
- wenigstens ein Funkmodul (20) nach einem der Ansprüche 12 oder 13, welches jeweils die Funkeinheit (20) ausbildet,
wobei das System (1) zur Durchführung eines Verfahrens (100) nach einem der Ansprüche 1 bis 11 ausgebildet ist.

## Claims

1. A method (100) for securing communication between a mobile communication device (10) and a vehicle (5), in particular for authentication in a passive access system of the vehicle (5), wherein the vehicle (5) comprises at least one radio unit (20),
comprising the following stages:
a) Performing a transmission to provide at least one identifier-specific task information (KA) from the mobile communication device (10) to the at least one radio unit (20) of the vehicle (5),
b) Performing vehicle-side processing of the identifier-specific task information (KA) to determine an identifier (K) for the radio unit (20),
c) Determining addressing information (ID) by the mobile communication device (10) independently of the vehicle-side processing,
d) Initiating communication based on the addressing information (ID) by the mobile communication device (10),
e) Performing the communication between the mobile communication device (10) and the radio unit (20) if the addressing information (ID) matches the determined identifier (K).

2. Method (100) according to claim 1,
**characterized in that**
in stage a), the identifier-specific task information (KA) is provided by transmitting data from which the identifier-specific task information (KA) is determined, and from which further task information (WA) is also determined, wherein the further task information (WA) differs from the identifier-specific task information (KA), and in stage b), solution information (LI) is determined by processing the further task information (WA) on the vehicle side, wherein the solution information (LI) for authenticating the radio unit (20) is transmitted by means of the communication according to stage e) from the radio unit (20) to the mobile communication device (10), and is then preferably compared by the mobile communication device (10) with comparison information (VI) in order to confirm the identity of the radio unit (20) based on the comparison,
and/or that the identifier-specific task information (KA) is a challenge and the determined identifier (K) is a response according to a challenge-response procedure, and preferably additionally the further task information (WA) is provided as a further challenge and the solution information (LI) as a further response according to a challenge-response procedure.

3. Method (100) according to any of the preceding claims,
**characterized in that**
the identifier-specific task information (KA) is specific to a random number, in particular a secret one, which is generated in particular by the mobile communication device (10), and is preferably transmitted in encrypted form according to stage a) via a data transmission to the at least one radio unit (20), wherein the identifier (K) is preferably determined in accordance with stage b) and the addressing information (ID) is preferably determined in accordance with stage c) based on the task information (KA) and thus based on the same random number, such that the addressing information (ID) and the identifier (K) are identical.

4. Method (100) according to any of the preceding claims,
**characterized in that**
the initiating of communication according to stage d) is performed by means of a data transmission of the addressing information (ID), preferably via broadcast, wherein the securing of the communication is performed depending on a time point of this data transmission, preferably depending on a time interval between this data transmission and a subsequent data transmission of the communication.

5. Method (100) according to any one of claims 2 to 4,
**characterized in that**
the transmission according to stage a) is performed by transmitting data from the mobile communication device (10) to the at least one radio unit (20) of the vehicle (5), wherein the data for the identifier-specific task information (KA) and/or for the further task information (WA) is such that, in stage b), the identifier-specific task information (KA) and/or the further task information (WA) is calculated from the data, preferably using a secret key,
and/or that during the transmission according to stage a), the identifier-specific task information (KA) and/or the further task information (WA) is provided by means of exactly one transmission message, preferably a data packet, wherein the task information (KA) and/or the further task information (WA) is preferably determined from the transmission message using a secret key,
and/or that stage a) comprises transmitting as a broadcast and/or stage d) comprises transmitting the addressing information (ID) as a broadcast, preferably to unspecified radio units (20).

6. Method (100) according to any one of claims 2 to 5,
**characterized in that**
the identifier-specific task information (KA) and/or the further task information (WA) and/or a transmission message each comprise at least one random number, particularly preferably each comprising a data quantity in the range of 1 byte to 36 bytes, in particular 2 bytes to 16 bytes, preferably exactly 2 or 4 or 8 bytes.

7. Method (100) according to any one of claims 2 to 6,
**characterized in that**
in stage b), the vehicle-side processing comprises performing an identifier-specific cryptographic function using a secret key to determine the identifier (K), in particular to cryptographically compute it, and preferably comprises performing a further cryptographic function using a further secret key to determine the solution information (LI), in particular to compute it cryptographically, and in stage c), the addressing information (ID) is determined by the mobile communication device (10) performing the identifier-specific cryptographic function using the secret key, and preferably comparison information (VI) is determined by the mobile communication device (10) performing the further cryptographic function using the further secret key.

8. Method (100) according to any one of claims 2 to 7,
**characterized in that**
the determination, in particular the calculation, of the identifier (K) and/or the solution information (LI) by the vehicle (5) and/or the addressing information (ID) and/or comparison information (VI) by the mobile communication device (10) is performed on the basis of a cryptographic shared secret, which comprises at least one, preferably two different, secret keys,
and/or that the communication according to stage e) is performed to determine a spatial distance (A) between the mobile communication device (10) and the radio unit (20), preferably by a time-of-flight analysis.

9. Method (100) according to one of the preceding claims,
**characterized in that**
the transmission according to stage a) and/or the communication according to stages d) and e) is performed via ultra-wideband, such that the at least one radio unit (20) is configured as a UWB radio unit (20),
and/or that the transmission according to stage a) is carried out as a broadcast to unspecified radio units (20) of the vehicle (5), such that the identifier-specific task information (KA) is received by multiple radio units (20) of the vehicle (5) and is thus used as a common basis for determining respective different identifiers (K) by respective vehicle-side processing of respective radio units (20).

10. Method (100) according to any one of claims 2 to 9,
**characterized in that**
in accordance with stage b), different vehicle-side processing operations are performed for different radio units (20), which are each carried out on the basis of the same identifier-specific task information (KA), and preferably also the same further task information (WA), so that different identifiers (K) for the different radio units (20) are determined by performing the processing based on different radio-unit-specific information, in particular secret keys.

11. Method (100) according to any of the preceding claims,
**characterized in that**
a plurality of radio units (20) are provided on the vehicle (5), each of which has a variable identifier for addressing during communication in accordance with stages d) and e), which is preferably cryptographically formed by the determined identifier (K),
and/or that the execution of at least one of stages a) through e) is initiated when an initiation signal, preferably via LF radio communication, is received by the communication device (10), in particular as an ID transmitter (10).

12. Radio module (20), comprising:
- a transceiver (20.1) for receiving a transmission message specific to the identifier-specific task information (KA) from a mobile communication device (10) via radio, preferably via ultra-wideband,
- an electronic processing unit (20.3) for performing vehicle-side processing of the identifier-specific task information (KA) in order to determine an identifier (K) for the radio module (20),
wherein the processing unit (20.3) is configured to set the identifier (K) as an identifier for addressing the radio module (20) during communication with the mobile communication device (10),
wherein the radio module (20) is configured as a radio unit (20) according to a method (100) as described in one of the preceding claims.

13. Radio module (20) according to claim 12,
**characterized in that**
the processing unit (20.3) is electrically connected to an electronic memory unit (20.2) in order to read key information for performing the vehicle-side processing from the memory unit (20.2), wherein the key information is cryptographically secret and uniquely assigned to the radio module (20).

14. Mobile communication device (10) for authentication with a vehicle (5), comprising:
- an electronic storage device (10.2) that stores at least one piece of key information for authenticating at least one radio unit (20) of the vehicle (5),
- an electronic processing device (10.3), which is electrically connected to the storage device (10.2) and is configured to cryptographically determine, based on the at least one key information, at least one addressing information (ID) for addressing the at least one radio unit (20),
wherein the communication device (10) is configured to perform a method (100) according to one of claims 1 to 11.

15. A system (1) comprising:
- a mobile communication device (10) according to claim 14,
- at least one radio module (20) according to one of claims 12 or 13, each of which forms the radio unit (20),
wherein the system (1) is configured to perform a method (100) according to one of claims 1 to 11.

## Revendications

1. Procédé (100) pour sécuriser une communication entre un appareil de communication mobile (10) et un véhicule (5), en particulier pour l'authentification dans le cadre d'un système d'accès passif du véhicule (5), le véhicule (5) comportant au moins une unité radio (20),
comprenant les étapes suivantes :
a) effectuer une transmission pour fournir au moins une information de tâche spécifique à l'identifiant (KA) depuis l'appareil de communication mobile (10) vers au moins une unité radio (20) du véhicule (5),
b) effectuer un traitement côté véhicule des informations de tâches spécifiques à l'identifiant (KA) afin de déterminer un identifiant (K) pour l'unité radio (20),
c) déterminer des informations d'adressage (ID) par l'appareil de communication mobile (10) indépendamment du traitement côté véhicule,
d) lancer une communication à l'aide des informations d'adressage (ID) par l'appareil de communication mobile (10),
e) effectuer la communication entre l'appareil de communication mobile (10) et l'unité radio (20) lorsque les informations d'adressage (ID) correspondent à l'identifiant (K) déterminé.

2. Procédé (100) selon la revendication 1,
**caractérisé en ce que**,
à l'étape a), les informations de tâche spécifiques à l'identifiant (KA) sont fournies par la transmission de données à partir desquelles les informations de tâche spécifiques à l'identifiant (KA) sont déterminées, et à partir desquelles sont également déterminées d'autres informations de tâche (WA), lesdites autres informations de tâche (WA) se distinguant des informations de tâche spécifiques à l'identifiant (KA), et à l'étape b), des informations de solution (LI) sont déterminées par le traitement côté véhicule des autres informations de tâche (WA), lesdites informations de solution (LI) servant à l'authentification de l'unité radio (20) au moyen de la communication selon l'étape e) de l'unité radio (20) vers l'appareil de communication mobile (10), puis sont de préférence comparées par l'appareil de communication mobile (10) à des informations de comparaison (VI) afin de confirmer, sur la base de la comparaison, l'identité de l'unité radio (20),
et/ou **en ce que** les informations de tâche spécifiques à l'identifiant (KA) constituent un défi et l'identifiant déterminé (K) une réponse selon un procédé de type défi-réponse, et de préférence **en ce que** les informations de tâche supplémentaires (WA) sont en outre fournies en tant que défi supplémentaire et les informations de solution (LI) en tant que réponse supplémentaire selon un procédé de type défi-réponse.

3. Procédé (100) selon l'une des revendications précédentes,
**caractérisé en ce que**
les informations de tâche spécifiques à l'identifiant (KA) sont spécifiques à un nombre aléatoire, en particulier secret, qui est notamment généré par l'appareil de communication mobile (10), et sont de préférence transmises de manière cryptée, conformément à l'étape a), par un transfert de données vers au moins une unité radio (20), la détermination de l'identifiant (K) selon l'étape b) et la détermination des informations d'adressage (ID) selon l'étape c) s'effectuant de préférence à partir des informations de tâche (KA) et donc à partir du même nombre aléatoire, de sorte que les informations d'adressage (ID) et l'identifiant (K) sont identiques.

4. Procédé (100) selon l'une des revendications précédentes,
**caractérisé en ce que**
le lancement de la communication selon l'étape d) s'effectue au moyen d'une transmission de données des informations d'adressage (ID), de préférence par diffusion, la sécurisation de la communication s'effectuant en fonction d'un moment de cette transmission de données, de préférence en fonction d'un intervalle de temps entre cette transmission de données et une autre transmission de données de la communication.

5. Procédé (100) selon l'une des revendications 2 à 4,
**caractérisé en ce que**
la transmission selon l'étape a) est effectuée par l'envoi de données depuis l'appareil de communication mobile (10) vers au moins une unité radio (20) du véhicule (5), les données pour les informations de tâches spécifiques à l'identifiant (KA) et/ou pour les autres informations de tâches (WA) étant telles que, lors de l'étape b), les informations de tâches spécifiques à l'identifiant (KA) et/ou les autres informations de tâches (WA) sont calculées à partir des données, de préférence à l'aide d'une clé secrète,
et/ou que, lors de la transmission selon l'étape a), les informations de tâches spécifiques à l'identifiant (KA) et/ou les informations de tâches supplémentaires (WA) sont fournies au moyen d'un seul message de transmission, de préférence d'un paquet de données, les informations de tâches (KA) et/ou les informations de tâches supplémentaires (WA) étant de préférence déterminées à partir du message de transmission à l'aide d'une clé secrète,
et/ou que l'étape a) comprend la transmission sous forme de diffusion et/ou que l'étape d) comprend l'émission des informations d'adressage (ID) sous forme de diffusion, de préférence vers des unités radio (20) indéterminées.

6. Procédé (100) selon l'une des revendications 2 à 5,
**caractérisé en ce que**
les informations de tâche spécifiques à l'identifiant (KA) et/ou les informations de tâche supplémentaires (WA) et/ou un message de transmission comprennent chacune au moins un nombre aléatoire, de préférence comprenant chacune une quantité de données comprise entre 1 octet et 36 octets, en particulier de 2 octets à 16 octets, de préférence exactement 2, 4 ou 8 octets.

7. Procédé (100) selon l'une des revendications 2 à 6,
**caractérisé en ce que**,
à l'étape b), le traitement côté véhicule comprend l'exécution d'une fonction cryptographique spécifique à l'identifiant à l'aide d'une clé secrète afin de déterminer l'identifiant (K), en particulier de la calculer cryptographiquement, et comprend de préférence une autre fonction cryptographique à l'aide d'une autre clé secrète afin de déterminer l'information de solution (LI), en particulier de la calculer cryptographiquement, et, à l'étape c), l'information d'adressage (ID) est déterminée par le fait que la fonction cryptographique spécifique à l'identifiant est exécutée à l'aide de la clé secrète par l'appareil de communication mobile (10), et de préférence, une information de comparaison (VI) est déterminée par le fait que l'autre fonction cryptographique est exécutée à l'aide de l'autre clé secrète par l'appareil de communication mobile (10).

8. Procédé (100) selon l'une des revendications 2 à 7,
**caractérisé en ce que**
la détermination, en particulier le calcul, de l'identifiant (K) et/ou des informations de solution (LI) par le véhicule (5) et/ou de l'information d'adressage (ID) et/ou d'une information de comparaison (VI) par l'appareil de communication mobile (10) s'effectue à l'aide d'un secret cryptographique commun, qui comprend au moins une, de préférence deux clés secrètes différentes,
et/ou **en ce que** la communication selon l'étape e) est effectuée pour déterminer une distance spatiale (A) entre l'appareil de communication mobile (10) et l'unité radio (20), de préférence par une analyse du temps de vol.

9. Procédé (100) selon l'une des revendications précédentes,
**caractérisé en ce que**
la transmission selon l'étape a) et/ou la communication selon les étapes d) et e) s'effectuent par bande ultra-large, de sorte qu'au moins une unité radio (20) est conçue respectivement comme une unité radio UWB (20),
et/ou **en ce que** la transmission selon l'étape a) est effectuée sous forme de diffusion (broadcast) vers des unités radio (20) indéterminées du véhicule (5), de sorte que les informations de tâches spécifiques à l'identifiant (KA) sont reçues par plusieurs unités radio (20) du véhicule (5) et sont ainsi utilisées comme base commune pour la détermination de différents identifiants (K) respectifs par des traitements côté véhicule respectifs des unités radio (20) correspondantes.

10. Procédé (100) selon l'une des revendications 2 à 9,
**caractérisé en ce que**,
conformément à l'étape b), différents traitements côté véhicule sont effectués pour différentes unités radio (20), lesquels sont respectivement effectués sur la base des mêmes informations de tâches spécifiques à l'identifiant (KA), et de préférence également sur la base des mêmes informations de tâches supplémentaires (WA), de sorte que différents identifiants (K) pour les différentes unités radio (20) sont déterminés par le fait que les traitements sont effectués à l'aide d'informations spécifiques aux unités radio, en particulier de clés secrètes.

11. Procédé (100) selon l'une des revendications précédentes,
**caractérisé en ce que**
plusieurs unités radio (20) sont prévues sur le véhicule (5), lesquelles présentent chacune un identifiant modifiable pour l'adressage lors de la communication selon les étapes d) et e), lequel est de préférence formé de manière cryptographique par l'identifiant (K) déterminé,
et/ou **en ce que** l'exécution d'au moins l'une des étapes a) à e) est déclenchée lorsqu'un signal de déclenchement, de préférence via une communication radio LF, est reçu par le dispositif de communication (10), en particulier en tant qu'émetteur d'identifiant (10).

12. Module radio (20) comprenant :
- un dispositif d'émission-réception (20.1) destiné à recevoir, par voie radio, de préférence en bande ultra-large, un message de transmission spécifique aux informations de tâches spécifiques à l'identifiant (KA) provenant d'un appareil de communication mobile (10),
- une unité de traitement électronique (20.3) destinée à effectuer un traitement côté véhicule des informations de tâches spécifiques à l'identifiant (KA) afin de déterminer un identifiant (K) pour le module radio (20),
l'unité de traitement (20.3) est conçue pour définir l'identifiant (K) comme un identifiant permettant d'adresser le module radio (20) lors d'une communication avec l'appareil de communication mobile (10),
le module radio (20) étant conçu comme une unité radio (20) selon un procédé (100) conformément à l'une des revendications précédentes.

13. Module radio (20) selon la revendication 12,
**caractérisé en ce que**
l'unité de traitement (20.3) est reliée électriquement à une unité de mémoire électronique (20.2) afin de lire, à partir de l'unité de mémoire (20.2), une information de clé pour l'exécution du traitement côté véhicule, l'information de clé étant cryptographiquement secrète et attribuée de manière univoque au module radio (20).

14. Appareil de communication mobile (10) destiné à l'authentification auprès d'un véhicule (5), comprenant :
- un dispositif de mémoire électronique (10.2) qui a mémorisé au moins une information de clé pour l'authentification d'au moins une unité radio (20) du véhicule (5),
- un dispositif de traitement électronique (10.3), qui est relié électriquement au dispositif de mémoire (10.2) et est conçu pour déterminer de manière cryptographique, à partir de ladite au moins une information de clé, au moins une information d'adressage (ID) pour l'adressage de ladite au moins une unité radio (20),
l'appareil de communication (10) étant conçu pour mettre en œuvre un procédé (100) selon l'une des revendications 1 à 11.

15. Système (1) comprenant :
- un appareil de communication mobile (10) selon la revendication 14,
- au moins un module radio (20) selon l'une des revendications 12 ou 13, qui constitue respectivement l'unité radio (20),
le système (1) étant conçu pour mettre en œuvre un procédé (100) selon l'une des revendications 1 à 11.
